# EUROPÄISCHE PATENTSCHRIFT

(11) **EP 0 493 381 B1**
(45) Veröffentlichungstag und Bekanntmachung des Hinweises auf die Patenterteilung: **30.11.1994**
(21) Anmeldenummer: 90902611.4
(22) Anmeldetag: 09.02.1990
(51) Int. Cl.: H04Q 11/04

(54) **SCHALTUNGSANORDNUNG MIT WENIGSTENS EINEM EINGANG UND WENIGSTENS EINEM AUSGANG ZU EINER WEITERGABE EINES FILTERBAREN PARALLELISIERBAREN DIGITALISIERBAREN EINGANGSSIGNALES**
CIRCUIT ARRANGEMENT WITH AT LEAST ONE INPUT AND ONE OUTPUT FOR TRANSMITTING A SIGNAL WHICH CAN BE FILTERED, PARALLELIZED AND DIGITIZED
CIRCUIT AVEC AU MOINS UNE ENTREE ET AU MOINS UNE SORTIE POUR UNE RETRANSMISSION D'UN SIGNAL D'ENTREE FILTRABLE, NUMERISABLE ET POUVANT ETRE MIS EN PARALLELE

(30) Priorität: 25.09.1989 DE 3931977
(43) Veröffentlichungstag der Anmeldung: 08.07.1992
(73) Patentinhaber: SIEMENS AKTIENGESELLSCHAFT, 80333 München (DE)
(72) Erfinder: LAWITZKY, Gisbert, D-8000 München 71 (DE); MÖLLER, Wolf-Dietrich, D-8000 München 83 (DE); SCHMITT, Franz-Josef, D-8202 Bad Aibling (DE)
(86) Internationale Anmeldenummer: DE9000086
(87) Internationale Veröffentlichungsnummer: WO9104641

(56) Entgegenhaltungen:
- EP-A- 0 263 418
- EP-A- 0 310 759
- US-A- 4 092 497
- US-A- 4 661 947
- US-A- 4 760 570

## Beschreibung

Die Erfindung betrifft eine Schaltungsanordnung mit wenigstens einem Eingang und wenigstens einem Ausgang zu einer Weitergabe eines parallelisierbaren digitalisierbaren Eingangssignales.

Derartige Schaltungsanordnungen werden beispielsweise für einen Koppelnetzbaustein eines Netzknotens in einem Datenpaketvermittlungsnetz verwendet.

In der Patentschrift US-A-4760570 ist ein N-zu-N Knockout-Vermittlungsknoten für ein hochleistungsfähiges Paketvermittlungssystem beschrieben. Dieses ist ebenfalls von den Autoren Y.S.Yeh, M.G. Hluchyj und A.S. Acampora beschrieben im IEEE Journal on Selected Areas in Comunication, Volume SAC-5, Nr.5, 1987, auf den Seiten 801-808 unter dem Titel "The Knockout Switch: A Simple, Modular Architecture for High-Performance Packet Switching" als Schaltungsanordnung, welche aus mehreren Eingängen und mehreren Ausgängen besteht, und welche zu einer filterbaren Weitergabe eines seriellen Datenpaketes von einem der Eingänge zu einem aus dem Datenpaket ermittelbaren Ausgang vorgesehen ist. Durch einen direkt am Eingang nachgeschalteten Filter werden Datenpakete ausgefiltert. Diese seriell am Eingang eingebbaren Datenpakete werden in einem Konzentrator seriell weitergeleitet. Der Konzentrator ist dabei eine matrixförmige Permutationsschaltung bestehend aus Grundelementen, von welchen seriell das Datenpaket Bit für Bit weitergeleitet wird. Aus dem Konzentrator werden die Datenpakete seriell in einen Schifter weitergeleitet. Durch den Shifter erfolgt für den seriellen Datenpaketfluß eine serielle Lenkung und serielle Weiterleitung für eine Zwischenspeicherung in Paketspeichern, in welchen die Datenpakete seriell fallweise gleichzeitig eingelesen und seriell wieder ausgelesen werden. Für jeden der Ausgänge ist ein gemeinsamer Puffer bestehend aus Schifter und einer bestimmten Anzahl von Paketspeichern vorgesehen. Der serielle Datenpaketfluß von einer größeren Anzahl von Eingängen ist über mehrere Konzentratoren mit vorgeschalteten Filtern mittels einer für jeden der Ausgänge vorgesehenen Zusammenschaltung in einem dem Ausgang zugeordneten Puffer konzentrierbar und speicherbar. Die Lenkung des Datenpaketflusses erfolgt dezentral und lokal. In den Filtern wird der für die Weiterleitung des Datenpaketes zutreffende Ausgang aus dem Datenpaket ermittelt. Durch das Filter werden alle Datenpakete ausgeblendet, die nicht für den dem Filter zugeordneten Ausgang bestimmt sind. Außer bei der Speicherung im Paketspeicher werden die Datenpakete sonst stets seriell weitergeleitet. Dieser sog. KO-Switch ist frei von inneren Blockierungen, da der Weg des seriellen Datenpaketes vom Eingang zum Ausgang nicht korrelliert ist mit dem Weg anderer serieller Datenpakete zu anderen Ausgängen. Je nach Anzahl der Paketspeicher pro Ausgang sind äußere Blockierungen verhinderbar. Gleichzeitig an mehreren Eingängen eintreffende Datenpakete, welche für denselben Ausgang bestimmt sind, sind in den Paketspeichern des Puffers zwischenspeicherbar.

Die Autoren Thomas A., Coudreuse J.-P. und Servel M. beschreiben unter dem Titel "Asynchronous Time-Division Techniques: An Experimental Packet Network integrating Videocommunication" auf dem Symposium ISS'84 Florenz, Italien, 7.bis 11.Mai 1984 Session 32 C Paper 2, einen Vermittlungsknoten, welcher "Prelude" genannt wird. Bei einer externen Bitrate von 280 Megabit pro Sekunde auf den Eingangs-und Ausgangsleitungen und mit 35 Megabit pro Sekunde intern sind auch bei hoher Last geringe Verlustraten und Verzögerungen erzielbar. Steuerung und Speicherung erfolgt zentral. Die auf den 16 Eingangsleitungen des Knotens ankommenden, 16 Byte langen Pakete werden synchronisiert und jeweils um ein Byte versetzt und byteweise in den zentralen Paketzwischenspeicher eingelesen. Diese Technik wird auch "paragonal" genannt, was von parallel-diagonal abgeleitet wurde. Die zentrale Steuereinheit nimmt die Umwertung der virtuellen Verbindungsadressen vor und veranlasst den Eintrag, unter dem das betreffende Paket im zentralen Paketzwischenspeicher aufgefunden wird. Der Eintrag wird in einer dem entsprechenden Ausgang zugeordneten Warteschlange vorgenommen, die der Reihenfolge des Eintrags nach abgearbeitet wird. Durch die paragonale Struktur der Aufbereitung der Datenpakete wird die zentrale Steuereinheit entlastet.

In der Offenlegungsschrift EP-A2-0263418 ist ein Durchschaltenetzwerk angegeben zur Durchschaltung von digitalen Eingabesignalen, welche auf Eingangsleitungen ankommen, zu digitalen Ausgabesignalen, welche auf Ausgangsleitungen ausgegeben werden, sodaß die Eingabesignale synchronisiert und blockweise zuammengesetzt werden in Zeitabschnitten, sowie daß ein Multiplexsignal erhalten wird, welches aus den zeitabschnittsweise synchronisierten Eingabesignalen blockweise zuammengesetzt ist in Multiplexblöcken, sowie daß die Multiplexblöcke des Multiplexsignales untereinander ausgetauscht werden zur Bildung eines durchgeschalteten Multiplexsignales, sowie daß die Multiplexblöcke des durchgeschalteten Multiplexsignales umgewandelt werden und blockweise ausgegeben werden als Ausgabesignale. Es ist ein Durchschaltesteuersignal erforderlich, ein sog. Connection-Control-Signal, durch welches festgelegt wird, welche der Eingangsleitungen mit welcher der Ausgangsleitungen zeitabschnittsweise durchzuschalten ist, sodaß das Vertauschen der Multiplexblöcke durch dieses Durchschaltesteuersignal gesteuert wird.

Die Aufgabe der Erfindung besteht darin, eine weitere Schaltungsanordnung für eine Weitergabe eines parallelisierbaren digitalisierbaren Signales, insbesondere eines seriellen Datenpaketes mit einer besonders hohen Bitrate von einem Eingang zu einem aus dem Signal ermittelbaren Ausgang anzugeben.

Diese Aufgabe ist gelöst einer Schaltungsanordnung mit wenigstens einem Eingang und wenigstens einem Ausgang zu einer Weitergabe eines filterbaren parallelisierbaren digitalisierbaren Eingangssignales mit folgenden Merkmalen:
a) das an einem Eingang (80) der Schaltungsanordnung (1000, 2000) eingebbare Eingangssignal (8) ist zuführbar einem Eingangssignalformumsetzer (60) zu einer Eingangsumformung in ein zumindest teilweise parallelisiertes Bitgruppenpaketsignal (1) bestehend aus wenigstens einer parallelen Bitgruppe,
b) einem Ausgang (90) der Schaltungsanordnung (1000, 2000) vorgeschaltet ist ein Ausgangssignalformumsetzer (30) zu einer Ausgangsumformung des Bitgruppenpaketsignals (3) in ein am Ausgang (90) abgebbares Ausgangssignal (9),
c) zur parallelen Weitergabe der Bitgruppen vom Eingangssignalformumsetzer (60) zum Ausgangssignalformumsetzer (30) ist ein Weitergabemittel (20) vorgesehen,
d) zu einer Zwischenspeicherung von wenigstens einer der Bitgruppen des Bitgruppenpaketsignales ist ein Zwischenspeicher (40) vorgesehen,
e) zu einer filterbaren Weitergabe des Bitgruppenpaketsignales ist ein Ausgangsfilter (50) vorgesehen, von welchem der für die Weitergabe zutreffende Ausgang aus dem Bitgruppenpaketsignal zu ermitteln ist.

Der Erfindung liegt die Erkenntnis zugrunde, daß mittels einer unmittelbar am Eingang vorgesehenen Parallelisierung, einer Zwischenspeicherung und einer unmittelbar am Ausgang vorgesehenen Umsetzung die interne Arbeitsgeschwindigkeit verringerbar ist, und insbesondere eine besonders hohe externe serielle Bitrate intern parallel umgesetzt dezentral gesteuert weitergebbar ist.

Das Eingangssignal kann dabei in einer optischen oder elektronischen Eingangssignalform digitalisierbar und parallelisierbar vorgesehen sein.

Im Eingangssignalformumsetzer kann das Signal in ein Bitgruppenpaketsignal umgesetzt werden, welches aus einer oder mehreren Bitgruppen zusammengesetzt ist.

Im Ausgangssignalformumsetzer kann aus der oder den Bitgruppen des Bitgruppenpaketsignales das Ausgangssignal gebildet werden.

Eine Schaltungsanordnung mit nur einem Eingang und nur einem Ausgang ist beispielsweise anwendbar für eine Verzögerung, Umcodierung, Umsetzung des Signales oder Ausblendung, wobei aus dem Signal ermittelbar ist, ob das Signal zum Ausgang weitergeleitet oder ausgeblendet wird.

Intern erfolgt die parallele Weitergabe des Bitgruppenpaketsignales bevorzugt bitgruppenweise.

In einem Zwischenspeicher kann wenigstens eine Bitgruppe des Bitgruppenpaketsignals zwischengespeichert werden.

Der für die Weitergabe zutreffende Ausgang kann aus der Bitgruppe oder den Bitgruppen des Bitgruppenpaketsignales ermittelt werden. Die Weitergabe eines Bitgruppenpaketsignales kann blockiert oder freigegeben werden.

Bei einer besonders breiten Parallelisierung des Eingangssignales im Eingangssignalformumsetzer ist die interne Arbeitsgeschwindigkeit besonders stark herabsetzbar. Durch eine dezentrale Zwischenspeicherung ergeben sich Vorteile, welche die Arbeitsgeschwindigkeit des Weitergabemittels betreffen. Während bei einem zentral gesteuerten Netzknoten die zentrale Steuerung häufig überlastet sein kann, ist dies bei dem erfindungsgemäßen dezentralen Konzept vorteilhaft vermieden.

Je nach Anwendungsfall erfolgt die Zwischenspeicherung der Bitgruppen der Bitgruppenpaketsignale beispielsweise nach einem reinen Eingangsspeicherprinzip, oder beispielsweise nach einem reinen Ausgangsspeicherprinzip, oder beispielsweise nach einer Kombination aus beiden Prinzipien, oder beispielsweise nach keinem dieser Prinzipien. Auch ist es in bestimmten Anwendungsfällen sinnvoll, daß die Zwischenspeicherung beispielsweise in einem Bitgruppenregister vorgesehen ist, welches zusätzliche Funktionen aufweist, und beispielsweise als Schieberegister verwendet wird beispielsweise im Eingangssignalformumsetzer oder im Ausgangssignalformumsetzer. Für besondere Anwendungsfälle ist es zweckmäßig, daß das Weitergabemittel schrittweise Bitgruppen weiterleitet von Bitgruppenregister zu Bitgruppenregister. Für bekannte bitserielle Anordnungen beispielsweise einer Banyan-Struktur, oder beispielsweise eines Hyperkonzentrators, oder beispielsweise von Mergeboxen, oder andere bekannte bitserielle Strukturen ist die Arbeitsgeschwindigkeit gemäß Erfindung zufolge der parallelisierung entscheidend reduzierbar, sodaß anstelle jeweils eines Zwischenspeichers für ein Bit bei den bekannten Anordnungen erfindungsgemäß ein Bitgruppenregister zu einer parallelen Zwischenspeicherung einer breiten Bitgruppe vorgesehen ist. Dabei kann zufolge der Parallelisierung die interne Arbeitsgeschwindigkeit herabgesetzt sein, insbesondere für eine parallele Weitergabe oder Zwischenspeicherung der Bitgruppen. Von der großen Vielzahl von vorteilhaften Anwendungsfällen der Erfindung werden in der Folge insbesondere bevorzugte Ausführungsformen beschrieben.

Eine bevorzugte Ausführungsform der Erfindung ist dadurch gekennzeichnet, daß eine Eingangssignalform des Eingangssignales und eine Ausgangssignalform des Ausgangssignales gleich sind und ein taktgesteuertes serielles digitales und elektronisches Datenpaket sind. Vorteilhafterweise sind dadurch mehrere Schaltungsanordnungen beispielsweise in einem Netzknoten eines Datenpaketvermittlungsnetzes auf einfache Weise zusammenschaltbar. Das Datenpaket besteht beispielsweise aus Organisationsteil und Datenteil. Im Organisationsteil ist häufig das Adressierungskennzeichen enthalten, durch welches der für die Weitergabe zutreffende Ausgang der Schaltungsanordnung bestimmbar ist.

Eine weitere bevorzugte Ausführungsform der Erfindung ist gekennzeichnet durch ein Ausgangsschieberegister des Ausgangssignalformumsetzers, in welches das Bitgruppenpaket signal bitgruppenweise parallel eingebbar ist, und aus welchem das Ausgangssignal seriell abgebbar ist. Das Bitgruppenpaketsignal kann dabei aus einer oder mehreren Bitgruppen bestehen. Die Breite des Ausgangsschieberegisters kann gleich der Bitzahl der Bitgruppe sein. Mit jedem Ausgangsarbeitstakt, welcher beispielsweise gleich dem Bitgruppenarbeitstakt dividiert durch die Eingangsanzahl sein kann, kann jeweils eine Bitgruppe des Bitgruppenpaketsignals in das Ausgangsschieberegister parallel eingegeben werden. Gemäß dem Bittakt des Datenpaketes kann das Datenpaket vom Ausgangsschieberegister seriell abgegeben werden. In vorteilhafter Weise ist durch ein einfaches Ausgangsschieberegister die Ausgangssignalformumsetzung erzielbar.

Eine weitere bevorzugte Ausführungsform der Erfindung ist gekennzeichnet durch ein Eingangsschieberegister des Eingangssignalformumsetzers, in welches das Eingangssignal seriell eingebbar ist, und aus welchem das Bitgruppenpaketsignal bitgruppenweise parallel abgebbar ist. In einfacher Weise ist durch ein einfaches Eingangsschieberegister die Eingangssignalformumsetzung erzielbar.

Eine weitere bevorzugte Ausführungsform der Erfindung ist dadurch gekennzeichnet, daß das Weitergabemittel einen Bitgruppenbus aufweist. In vorteilhafter Weise kann durch den Bitgruppenbus das Bitgruppenpaketsignal von einer Einheit der Schaltungsanordnung gleichzeitig zu einer oder mehreren Einheiten der Schaltungsanordnung weitergegeben werden. Bevorzugt kann eine Breite des Bitgruppenbusses in der Breite der Bitgruppe vorgesehen sein.

Eine weitere bevorzugte Ausführungsform der Erfindung ist gekennzeichnet durch einen Bitgruppenspeicher des Weitergabemittels zu einer Speicherung der Bitgruppen in Bitgruppenspeicherregistern. Zur Vermeidung von äußeren Blockierungen sind Datenpaketsignale in den Bitgruppenspeicherregistern des Bitgruppenspeichers beispielsweise gruppenweise speicherbar, sodaß an mehreren Eingängen der Schaltungsanordnung gleichzeitig einlaufende Datenpakete mittels des Bitgruppenspeichers speicherbar und in aufeinanderfolgenden Datenpaketen weitergebbar und an einen Ausgang abgebbar sind. Die Breite des Bitgruppenspeicherregisters wird häufig auch Wortbreite eines Speicherwortes des Bitgruppenspeichers genannt. Der Bitgruppenspeicher kann dabei nach einem first-in-first-out-Prinzip vorgesehen sein. Derartige Bitgruppenspeicher sind in bekannt einfacher Weise realisierbar. Beispielsweise kann ein FIFO-Speicher mit Adressierungsregistern für die Eingabe ebenso wie für die Ausgabe von Bitgruppen verwendet werden. Ebenso kann ein FIFO-Speicher mit Schieberegistern eingesetzt werden. Weitere Ausführungsformen des Bitgruppenspeichers nach einem anderen Prinzip sind ebenso einsetzbar. Beispielsweise mittels einer direkten Adressierung oder einer Adressierung mittels Adressierungsregistern kann eine Pufferung in Verbindung mit einer Reihung der gespeicherten Bitgruppenpaketsignale vorgesehen sein. Die bevorzugte dringliche Weitergabe eines Bitgruppenpaketsignals kann dabei im Bitgruppenpaketsignal markiert sein oder aus dem Eingang abgeleitet sein, an welchem das Datenpaket eingegeben wurde. Beispielsweise ein am ersten der Eingänge eingegebenes Datenpaket wird bevorzugt dringlich weitergegeben bezüglich der an den anderen der Eingänge eingegebenen Datenpakete.

Eine weitere bevorzugte Ausführungsform der Erfindung ist dadurch gekennzeichnet, daß im Bitgruppenspeicher eine Paketanzahl der Bitgruppenpaketsignale gleich der Anzahl der Eingänge speicherbar ist. Aus dem Verkehrsprofil der ankommenden Datenpakete und der Vermittlungslast ergibt sich in Abhängigkeit von der im Bitgruppenspeicher speicherbaren Paketanzahl von Bitgruppenpaketsignalen eine mittlere Paketverlustwahrscheinlichkeit. Je größer die Paketanzahl für die im Bitgruppenspeicher speicherbaren Bitgruppenpaketsignale, umso geringer ist die mittlere Paketverlustwahrscheinlichkeit bei einer vergleichsweise gleichen Anzahl von ankommenden Datenpaketen. Bei einer mittleren Vermittlungslast und näherungsweise gleichmäßigem Verkehrsprofil ist bei dieser bevorzugten Ausführungsform der Schaltungsanordnung die mittlere Paketverlustwahrscheinlichkeit ausreichend niedrig.

Eine weitere bevorzugte Ausführungsform der Erfindung ist gekennzeichnet durch zumindest ein Indexregister des Bitgruppenspeichers zu einer Adressierung der Bitgruppenspeicherregister. Insbesondere bei einer zyklischen Verwendung der Bitgruppenspeicherregister kann dabei das Indexregister inkrementiert werden und als Zählregister verwendet werden.

Eine weitere bevorzugte Ausführungsform der Erfindung ist dadurch gekennzeichnet, daß der Bitgruppenspeicher ein dem jeweiligen Ausgang zugeordneter Ausgangsspeicher ist zur Speicherung von zum zugeordneten Ausgang weiterzugebenden Bitgruppen von Bitgruppenpaketsignalen. Der Bitgruppenspeicher kann dabei das Speicherelement einer Ausgangswarteschlange sein. Im Vergleich mit Eingangswarteschlangen haben in bekannter Weise Ausgangswarteschlangen den Vorteil, daß innere Blockierungen vermieden werden, und eine höhere Vermittlungslast erzielbar ist.

Eine weitere bevorzugte Ausführungsform der Erfindung ist dadurch gekennzeichnet, daß eine Bitanzahl der Bitgruppe vorgesehen ist, welche zumindest gleichgroß ist der Anzahl der Eingänge multipliziert mit einem Bittakt des Datenpaketes dividiert durch einen von einer Arbeitstakteinheit aufbereitbaren Bitgruppenarbeitstakt, welcher gleich ist einem Ausgangsspeicherarbeitstakt und ebenso einem Bitgruppenbusarbeitstakt. Die Breite der Parallelisierung kann durch die Bitanzahl der Bitgruppe festgelegt sein, abhängig vom Ausgangsspeicherarbeitstakt und von der Anzahl der Eingänge. Der Bitgruppenbusarbeitstakt kann gleich dem Ausgangsspeicherarbeitstakt sein. Dadurch sind von allen Eingängen Bitgruppen im Ausgangsspeicher speicherbar. Mittels des Bitgruppenbusses können die Bitgruppen vom Eingangssignalformumsetzer zu einem Ausgangsspeicher oder gleichzeitig zu allen Ausgangsspeichern weitergeleitet werden. Dabei kann eine Zwischenspeicherung einer oder mehrerer der Bitgruppen in einem Bitgruppenregister oder in einem Eingangsspeicher vorgesehen sein, welche direkt im Eingangssignalformumsetzer vorgesehen oder diesem unmittelbar nachgeschaltet sein können. In einer zyklischen Reihenfolge können der Reihe nach die Bitgruppen von allen Eingängen aus den Bitgruppenregistern oder den Eingangsspeichern durch den Bitgruppenbus abgeholt und weitergeleitet werden zum Ausgangsspeicher oder gleichzeitig an alle an den Bitgruppenbus angeschlossenen Ausgangsspeicher. Der Ausgangsfilter kann bei einer bevorzugten Ausführungsform unmittelbar dem Ausgangsspeicher vorgeschaltet oder direkt im Speichereingabeteil des Ausgangsspeichers vorgesehen sein. Ein vorteilhaft niedriger Arbeitsspeicherarbeitstakt ist bei einer besonders breiten Parallelisierung mit großer Bitanzahl der Bitgruppe erzielbar.

Eine weitere bevorzugte Ausführungform der Erfindung ist dadurch gekennzeichnet, daß das Eingangssignal im Eingangssignalformumsetzer in mehrere aufeinanderfolgende Bitgruppen des Bitgruppenpaketsignales umsetzbar ist, wobei aus der ersten Bitgruppe der für die Weitergabe zutreffende Ausgang ermittelbar ist. Der Ausgangsfilter kann aus der ersten Bitgruppe den für die Weitergabe aller Bitgruppen des Bitgruppenpaketsignals eines umgesetzten Datenpaketes zutreffenden Ausgang erkennen. In einer der genannten bevorzugten Ausführungsformen kann der Ausgangsfilter im Eingangssignalformumsetzer eingegliedert sein. In diesem Fall kann aus der ersten Bitgruppe des Bitgruppenpaketsignales eines umgesetzten Datenpaketes erkannt werden, ob diese erste und die weiteren folgenden Bitgruppen des Bitgruppenpaketsignales für die Weitergabe freizugeben oder zu blockieren sind. Falls die Weitergabe zu blockieren ist, wird die Weitergabe der ersten umgesetzten Bitgruppe blockiert oder gesperrt, ebenso wie für alle folgenden Bitgruppen, bis zum Eintreffen des nächsten Bitgruppenpaketsignales eines umgesetzten Datenpaketes. In einer anderen genannten Ausführungsform kann das Ausgangsfilter dem Ausgangsspeicher unmittelbar vorgeschaltet oder in diesen integriert sein. In diesem Fall kann beispielsweise anhand des Bitgruppenbusarbeitstaktes erkannt werden, von welchem Eingangssignalformumsetzer die erhaltene Bitgruppe stammt, sodaß diese zu einem Bitgruppenpaketsignal zuordenbar ist. Die Aufteilung des Bitgruppenpaketsignales in mehrere aufeinanderfolgende Bitgruppen kann in vorteilhafter Weise eine kleinere Bitanzahl der Bitgruppe ermöglichen, wodurch eine geringere Breite des Bitgruppenbusses möglich ist, was insbesondere dann vorteilhaft sein kann, wenn der Ausgangsspeicherarbeitstakt im Vergleich zum Bittakt des Datenpaketes nur wenig oder um wenige Größenordnungen geringer ist.

Eine weitere bevorzugte Ausführungsform der Erfindung ist gekennzeichnet durch ein Reihungsmittel des Ausgangsspeichers, durch welches die in den Ausgangsspeicher eingegebenen Bitgruppen gereiht in aufeinanderfolgenden Bitgruppenpaketsignalen ausgebbar sind. Beispielsweise anhand des Bitgruppenbusarbeitstaktes kann erkannt werden, von welchem Eingangssignalformumsetzer die über den Bitgruppenbus erhaltene Bitgruppe stammt. Die Bitgruppe kann dadurch dem Bitgruppenpaketsignal zugeordnet werden, so daß daraus das Reihungsmittel des Ausgangsspeichers die Speicherung der Bitgruppe in dem jeweiligen für die Speicherung der Bitgruppe vorgesehenen und reservierten Bitgruppenspeicherregister veranlaßt oder steuert. Die Adressierung des jeweiligen Bitgruppenspeicherregisters kann dabei beispielsweise mit Hilfe des oder eines der Indexregister des Bitgruppenspeichers erfolgen. Gemäß dem Ausgabearbeitstakt kann die Speicherausgabe der Bitgruppe durch das Reihungsmittel des Ausgangsspeichers erfolgen mit Hilfe des oder eines der Indexregister zur Adressierung des Bitgruppenspeicherregisters. Alle Bitgruppen eines Bitgruppenpaketsignales werden dabei gemäß ihrer Reihenfolge aufeinanderfolgend ausgegeben. Daran anschließend werden die gespeicherten Bitgruppen des nächstfolgenden Bitgruppenpaketsignales ausgegeben. Durch das Reihungsmittel kann veranlaßt werden, daß von mehreren gespeicherten Bitgruppenpaketsignalen jenes zuerst ausgegeben wird, welches als erstes gespeichert worden ist. Durch das Reihungsmittel kann in vorteilhafter Weise das Zusammenfügen der Bitgruppen zu Bitgruppenpaketsignalen erfolgen und die Reihenfolge der Bitgruppenpaketsignale kann auf vorteilhafte Weise veranlaßt oder gesteuert werden. Eine zusätzliche Warteschlangenorganisation ist dadurch nicht erforderlich, weil durch das Reihungsmittel des Ausgangsspeichers entsprechend der Adressierung der Bitgruppenspeicherregister die Speicherung der Bitgruppen im Ausgangsspeicher zyklisch erfolgen kann, geordnet nach Bitgruppenpaketsignalen, und innerhalb der Bitgruppenpaketsignale geordnet nach der Reihenfolge der Bitgruppen der Bitgruppenpaketsignale. Insbesondere für die Weitergabe besonders langer Datenpakete oder digitalisierbarer Signale einer besonders großen Bitanzahl ist diese Ausführungsform vorteilhaft anwendbar.

Eine weitere bevorzugte Ausführungsform der Erfindung ist gekennzeichnet, durch ein Bitgruppenpaketsignal bestehend aus einer einzigen Bitgruppe. Mit jeder Bitgruppe kann dabei in der Schaltungsanordnung ein ganzes Bitgruppenpaketsignal weitergeleitet werden. Bei einer Verwendung des Ausgangsspeichers kann dabei die zusätzliche Reihung der Bitgruppen für die Zusammenstellung von Bitgruppenpaketsignalen im Ausgangsspeicher entfallen. Diese Ausführungsform ist insbesondere bei einer geringeren Bitanzahl des Bitgruppenpaketsignales vorteilhaft anwendbar. Darüber hinaus ist bei einem besonders breiten Bitgruppenbus der Bitgruppenspeicherarbeitstakt im Vergleich zum Bittakt des Datenpaketes in vorteilhafter Weise besonders niedrig. Durch ein Ausgabemittel des Ausgangsspeichers kann von mehreren eingegebenen und gespeicherten Bitgruppen jeweils die als erste eingegebene Bitgruppe als erste ausgegeben werden. Gemäß der Adressierung der Bitgruppenspeicherregister können diese beispielsweise zyklisch beschrieben werden. Die Adressierung der Bitgruppenspeicherregister kann dabei beispielsweise mit Hilfe des oder der Indexregister des Bitgruppenspeichers erfolgen. Dadurch kann auf einfache Weise das Ausgabemittel realisiert werden.

Eine weitere bevorzugte Ausführungsform der Erfindung ist gekennzeichnet durch eine dem Eingang zugeordnete Eingangsstufe bestehend aus einem Eingangsspeicher als Zwischenspeicher und aus dem Eingangsschieberegister. Die Breite des Eingangsschieberegisters kann gleich der Bitanzahl der Bitgruppe sein. Dabei kann aus dem seriellen Datenpaket bei jedem Eingangsarbeitstakt jeweils eine Bitgruppe an den Eingangsspeicher parallel abgegeben werden. Dabei kann der Eingangsspeicher nach einem first-in-first-out-Prinzip vorgesehen sein, und beispielsweise die Bitgruppen von maximal zwei Bitgruppenpaketsignalen in seinen Bitgruppenregistern speichern können. Dabei kann bei einer Verwendung des Bitgruppenbusses dieser jeweils alle Bitgruppen eines ganzen Bitgruppenpaketsignales vom einen der Eingangsspeicher sequentiell abholen und kann danach jeweils alle die Bitgruppen eines weiteren Bitgruppenpaketsignales von einem weiteren der Eingangsspeicher sequentiell abholen. Auf diese Weise können durch die Zwischenspeicherung und durch das Aufsammeln der Bitgruppen in den Eingangsspeichern in diesen ganze Bitgruppenpaketsignale zusammengestellt werden. Bei der Verwendung derartiger Eingangsspeicher kann bei einer Verwendung von Ausgangsspeichern für diese die Reihung der Bitgruppen zu Bitgruppenpaketsignalen entfallen. Der Eingangsspeicher kann ebenso als Tandempuffer für Eingabe und Ausgabe je eines Bitgruppenpaketsignales ausgebildet sein. In einfacher Weise kann durch die Eingangsstufe eine Komponente der Schaltungsanordnung gebildet werden, welche insbesondere bei Erweiterungen vorteilhaft einsetzbar ist.

Eine weitere bevorzugte Ausführungsform der Erfindung ist gekennzeichnet durch eine Ausgangsstufe bestehend aus dem Ausgangsschieberegister, dem Ausgangsspeicher und dem Ausgangsfilter. Bitgruppenpaketsignale können an die Ausgangsstufe der Schaltungsanordnung weitergeleitet werden, wobei über das Ausgangsfilter jene Bitgruppenpaketsignale ausgefiltert werden können, deren Weiterleitung in der Ausgangsstufe der Schaltungsanordnung auszublenden ist. Auf einfache Weise kann durch die Ausgangsstufe eine Komponente der Schaltungsanordnung gebildet werden, welche insbesondere bei Erweiterungen vorteilhaft einsetzbar ist.

Zu jedem Eingang kann je eine Eingangsstufe und zu jedem Ausgang je eine Ausgangsstufe vorgesehen sein. Jedes am Eingang eintreffende Datenpaket kann in dem dem jeweiligen Eingang zugeordneten Eingangsschieberegister der Eingangsstufe zu den im Eingangsspeicher zwischenspeicherbaren Bitgruppen des Bitgruppenpaketsignales umgesetzt werden. Die in den Bitgruppenregister des Eingangsspeichers zwischengespeicherten Bitgruppen können durch den Bitgruppenbus der Schaltungsanordnung weitergeleitet werden und gelangen über die Ausgangsfilter zu den Ausgangsspeichern der Ausgangsstufe. Jedem Ausgangsspeicher kann ein Ausgangsfilter unmittelbar vorgeschaltet oder in diesen integriert sein. Die Weitergabe ist unmittelbar vor dem Ausgangsspeicher oder im Ausgangsspeicher ausblendbar. In jedem Fall werden nur jene Bitgruppen im Ausgangsspeicher gespeichert, deren Weitergabe zu dem dem Ausgangsspeicher zugeordneten Ausgang vorgesehen ist. Gemäß dem Ausgangsarbeitstakt können die Bitgruppen vom Ausgangsspeicher zum Ausgangssignalformumsetzer weitergeleitet werden. Vom Bitgruppenbus können die Bitgruppen gemäß dem Bitgruppenbusarbeitstakt vom Eingangsspeicher einer Eingangsstufe abgeholt und gleichzeitig zu jedem Ausgangsspeicher über die Ausgangsfilter weitergeleitet werden. Dabei können aus dem Eingangsspeicher unmittelbar nacheinander alle Bitgruppen eines Bitgruppenpaketsignals vom Bitgruppenbus zu den Ausgangsspeichern weitergeleitet werden.

Eine weitere bevorzugte Ausführungsform der Erfindung ist gekennzeichnet durch ein dem Ausgang zugeordnetes Ausgangsmodul, welches einerseits mit dem zugeordneten Ausgang und andererseits mit jedem Eingang verbunden ist, und welches den Ausgangsspeicher, den Bitgruppenbus, den Ausgangssignalformumsetzer und für jeden Eingang je einen Eingangsteil aufweist. Dadurch kann eine innere Blockierung der Schaltungsanordnung verhindert werden. Darüberhinaus kann auf einfache Weise durch den Ausgangsmodul eine Komponente der Schaltungsanordnung gebildet werden, welche insbesondere bei Erweiterungen vorteilhaft einsetzbar ist.

Eine weitere bevorzugte Ausführungsform der Erfindung ist dadurch gekennzeichnet, daß der Eingangsteil das Eingangsschieberegister, den Ausgangsfilter und einen Eingangsspeicher als Zwischenspeicher aufweist. Der Ausgangsfilter kann dabei dem Eingangsschieberegister unmittelbar vorgeschaltet sein, in dieses integriert sein, oder diesem unmittelbar nachgeschaltet sein. In jedem Fall werden in den Eingangsspeicher nur jene Bitgruppen zwischengespeichert, deren Weiterleitung zu dem dem Ausgangsmodul zugeordneten Ausgang durch das Ausgangsfilter überprüft und freigegeben ist. Durch den Bitgruppenbus des Ausgangsmoduls können die Bitgruppen vom Eingangsspeicher zum Ausgangsspeicher des Ausgangsmoduls weitergeleitet werden. Die Bitgruppen jeweils eines Bitgruppenpaketsignals werden vom Bitgruppenbus gemäß dem Bitgruppenbusarbeitstakt von den jedem Eingang zugeordneten Eingangsspeicher eins der Eingangsteile zum Ausgangsspeicher weitergeleitet. Vom Ausgangsspeicher ist zum Ausgangssignalformumsetzer jeweils eine Bitgruppe gemäß dem Ausgangsarbeitstakt weiterleitbar. Bei dieser Art der Schaltungsanordnung mit getrennten Ausgangsmodulen und einem Ausgangsfilter direkt im Eingangsteil werden vom Bitgruppenbus des jeweiligen Ausgangsmoduls werden nur jene Bitgruppen weitergeleitet, deren Weitergabe zu dem dem Ausgangsmodul zugeordneten Ausgang vorgesehen ist.

Eine weitere bevorzugte Ausführungsform der Erfindung ist gekennzeichnet durch einen integrierten Aufbau auf einer einzigen Halbleiterscheibe. Insbesondere ein besonders breiter Bitgruppenbus ist dadurch realisierbar. Bei einem besonders breiten Bitgruppenbus kann der Bitgruppenspeicherarbeitstakt im Vergleich zum Bittakt des Datenpaketes besonders niedrig sein. Das Basismaterial der Halbleiterscheibe kann beispielsweise Galliumarsenid sein, oder eines der sonstigen bekannten Halbleitermaterialien. Insbesondere bei Galliumarsenid können sich daraus bezüglich der kurzen Schaltzeiten die bekannten Vorteile der Galliumarsenid-Halbleiter-Technologie ergeben.

Eine weitere bevorzugte Ausführungform der Erfindung ist gekennzeichnet durch ein Basismaterial der Halbleiterscheibe bestehend aus Silizium. Bezüglich der kurzen Schaltzeichen und bezüglich der Wärmeleitung können sich daraus die bekannten Vorteile der kostengünstigen Silizium-Halbleiter-Technologie ergeben.

Eine weitere bevorzugte Ausführungsform der Erfindung ist dadurch gekennzeichnet, daß CMOS-Schaltungsteile auf der Halbleiterscheibe vorgesehen sind. Daraus können sich die bekannten Vorteile insbesondere bezüglich einer niedrigen Wärmeverlustleistung und insbesondere eines günstigen stabilen Verhaltens ergeben. Zusätzlich zu den CMOS-Schaltungsteilen können noch weitere elektronische Schaltungsteile vorgesehen sein.

Eine weitere bevorzugte Ausführungsform der Erfindung ist dadurch gekennzeichnet, daß BICMOS-Schaltungsteile auf der Halbleiterscheibe vorgesehen sind. Daraus können sich die bekannten Vorteile einer Verbindung der Bipolaren Technologie mit der CMOS-Technologie ergeben. Insbesondere die bekannten Vorteile der Bipolaren Technologie bezüglich der Schnelligkeit werden dadurch nutzbar. Beispielsweise der Eingangssignalformumsetzer ebenso wie der Ausgangssignalformumsetzer können in der bipolaren Technologie aufgebaut sein. Beispielsweise Schaltungselemente zur Zwischenspeicherung oder insbesondere zur Speicherung der Bitgruppen können in der CMOS-Technologie aufgebaut sein.

Eine weitere bevorzugte Ausführungsform der erfindungsgemäßen Schaltungsanordnung ist dadurch gekennzeichnet, daß deren Schaltungsteile auf der Halbleiterscheibe in rechteckförmigen Bereichen mit einer gleichen durch die Bitanzahl begründeten Registerbereichsbreite nebeneinanderliegend angeordnet sind. Durch die Verwendung von rechteckförmigen registerbereichsbreiten Bereichen zur Anordnung von Schaltungsteilen der Schaltungsanordnung ist eine optimale Nutzung der Fläche der Halbleiterscheibe erzielbar. Dabei können die Register der Schaltungselemente, insbesondere das Eingangsschieberegister, das Ausgangsschieberegister, das Bitgruppenregister und die Speichereingänge sowie die Speicherausgänge des Eingangsspeichers sowie des Ausgangsspeichers, entlang der Registerbereichsbreite der rechteckförmigen Bereiche Bit für Bit in einer Reihe angeordnet werden.

Eine weitere bevorzugte Ausführungsform der Erfindung ist dadurch gekennzeichnet, daß mit dem gleichen Bitgruppenbus zu verbindenden Bereiche jeweils Registerbereichsbreite an Registerbereichsbreite nebeneinanderliegend angeordnet sind. Insbesondere dadurch, daß alle zu einem Bitgruppenbus zugehörigen Bereiche Registerbereichsbreite an Registerbereichsbreite nebeneinanderliegend angeordnet sein können, sind die Leitungsverbindungen des Bitgruppenbusses auf vorteilhaft einfache Weise zumindest näherungsweise geradlienig verlegbar. Durch diese optimal kurzen Leitungsverbindungen können sich besondere Vorteile für die Laufzeit bei der Weitergabe der Bitgruppen ergeben.

Eine weitere bevorzugte Ausführungsform der Erfindung ist gekennzeichnet durch folgende Anordnung auf der Halbleiterscheibe:
a) das Ausgangsmodul ist in einem registerbereichsbreiten rechteckförmigen Modulbereich angeordnet.
b) jeweils die zu jedem Ausgang identisch aufgebauten Modulbereiche sind nebeneinanderliegend angeordnet,
c) jeweils zu jedem Eingang zugeordnete Eingangsschieberegister, Ausgangsfilter und Eingangsspeicher sind im Ausgangsmodul jeweils in einem registerbereichsbreiten rechteckförmigen Eingangsbereich angeordnet,
d) der Ausgangsspeicher und das Ausgangsschieberegistger sind im Ausgangsmodul in einem registerbereichsbreiten rechteckförmigen Ausgangsbereich angeordnet.

Diese bevorzugte Ausführungsform ist auf diese Weise mit einer optimalen Nutzung der Fläche der Halbleiterscheibe realisierbar.

Eine weitere bevorzugte Ausführungsform der Erfindung ist gekennzeichent durch folgende Anordnung auf der Halbleiterscheibe:
a) die je Eingang vorgesehenen Eingangsstufen sind in registerbereichsbreiten rechteckförmigen Eingangsstufenbereichen nebeneinanderliegend angeordnet,
b) die Ausgangsstufen sind in registerbereichsbreiten rechteckförmigen Ausgangsstufenbereich nebeneinanderliegend angeordnet,
c) die Eingangsstufenbereiche und die Ausgangsstufenbereiche sind nebeneinanderliegend angeordnet,
d) innerhalb jedes Eingangsstufenbereiches sind das Eingangsschieberegister und der Eingangsspeicher nebeneinanderliegend angeordnet,
e) innerhalb jedes Ausgangsstufenbereiches sind das Ausgangsfilter, der Ausgangsspeicher und das Ausgangsschieberegister nebeneinanderliegend angeordnet.

Diese bevorzugte Ausführungsform der Erfindung ist auf diese Weise mit einer optimalen Nutzung der Fläche der Halbleiterscheibe realisierbar.

Die Erfindung wird anhand der Figuren näher erläutert, in welchen Ausführungsbeispiele dargestellt sind.
- Die Figur 1: zeigt eine Netzstruktur eines Datennetzes für eine Vermittlung von Datenpaketen.
- Die Figur 2: zeigt einen Netzknoten des Datennetzes.
- Die Figur 3: zeigt ein Blockschaltbild eines ersten Ausführungsbeispieles der Erfindung.
- Die Figur 4: zeigt einen Floorplan des ersten Ausführungsbeispieles der Erfindung.
- Die Figur 5: zeigt ein Blockschaltbild eines zweiten Ausführungsbeispieles der Erfindung.
- Die Figur 6: zeigt die Taktzuleitungsstruktur für das zweit Ausführungsbeisipiel der Erfindung.
- Die Figur 7: zeigt die Arbeitstakteinheit für das zweite Ausführungsbeispiel der Erfindung.
- Die Figur 8: zeigt taktgesteuerte Schaltstrukturen für das zweite Ausführungsbeispiel der Erfindung.
- Die Figur 9: zeigt einen Ausgangsfilter für das zweite Ausführungsbeispiel der Erfindung.
- Die Figur 10: zeigt ein Taktdiagramm für das zweite Ausführungsbeispiel der Erfindung.
- Die Figur 11: zeigt einen Floorplan des zweiten Ausführungsbeispiels der Erfindung.

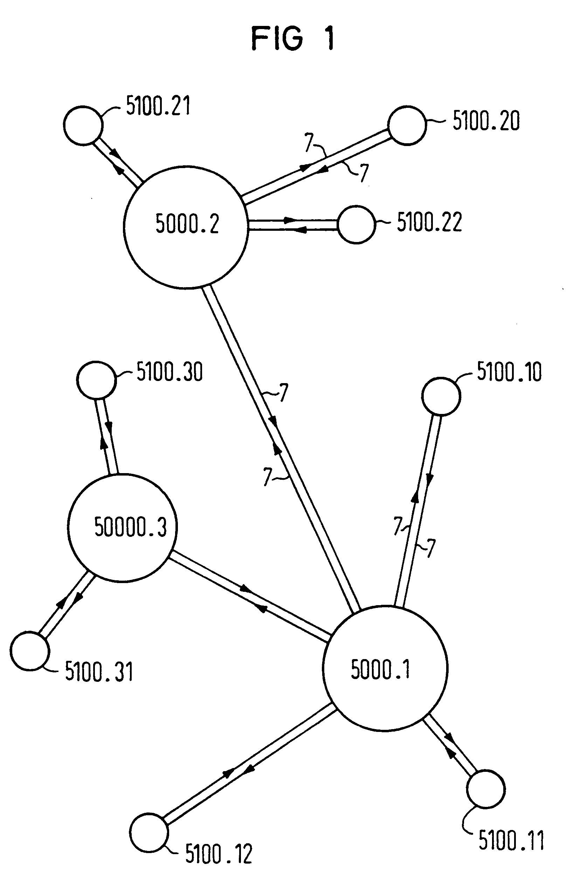

Wie die Figur 1 für die nachfolgenden Ausführungsbeispiele zeigt, besteht eine Netzstruktur eines taktsynchronen Datennetzes für eine Vermittlung von Datenpaketen aus beispielsweise drei Netzknoten 5000 und einer Anzahl von Teilnehmeranschlüssen 5100. Von den Teilnehmeranschlüssen 5100 werden Datenpakete als Datensignale 7 erzeugt und zur Vermittlung an die Netzknoten 5000 gesendet. In jedem Datenpaket ist ein Adressierungskennzeichen enthalten, welches von den Netzknoten 5000 ausgewertet wird, und welches den jeweiligen Teilnehmeranschluß 5100 angibt, welchem vom Netzknoten 5000 das Datenpaket das Datensignal 7 zuzusenden ist. Dabei kann das Datenpaket als Datensignal 7 von einem Netzknoten 5000 zu einem anderen Netzknoten 5000 gesendet werden.

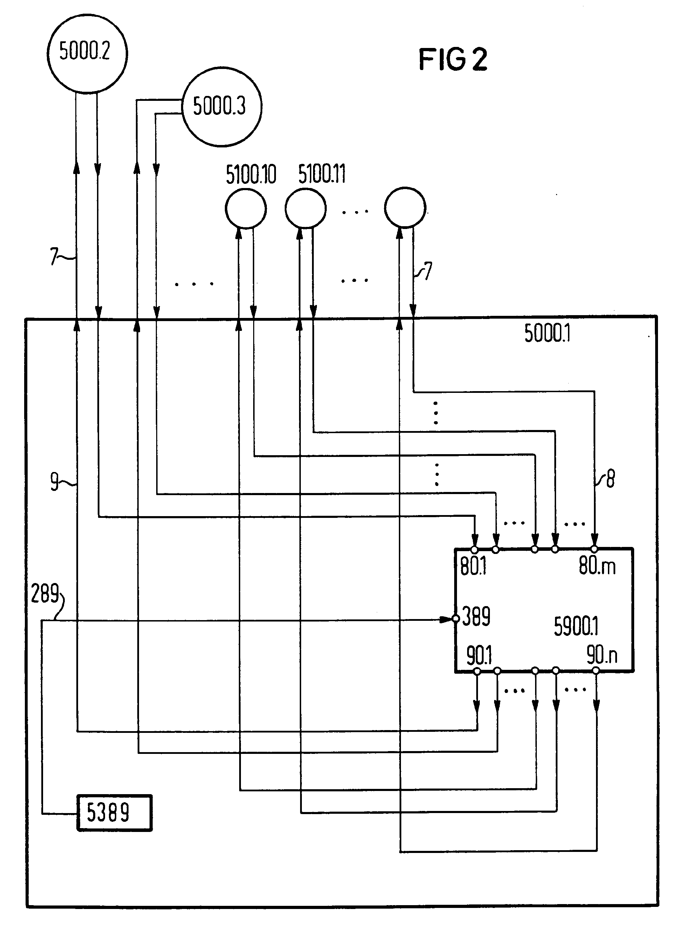

Wie die Figur 2 zeigt, enthält der Netzknoten 5000.1 eine Vermittlungszentrale 5900. Die vom Netzknoten 5000.1 empfangenen Datensignale 7 werden als Eingangssignale 8 den Eingängen der Vermittlungszentrale 5900 zugeführt. Von den Ausgängen der Vermittlungszentrale 5900 werden die Ausgangssignale 9 als die vom Netzknoten 5000.1 auszusenden Datensignale 7 abgeleitet. Von einem Taktgenerator 5389 wird ein Taktsignal 289 erzeugt und am Takteingang 389 der Vermittlungszentrale 5900 zugeführt.

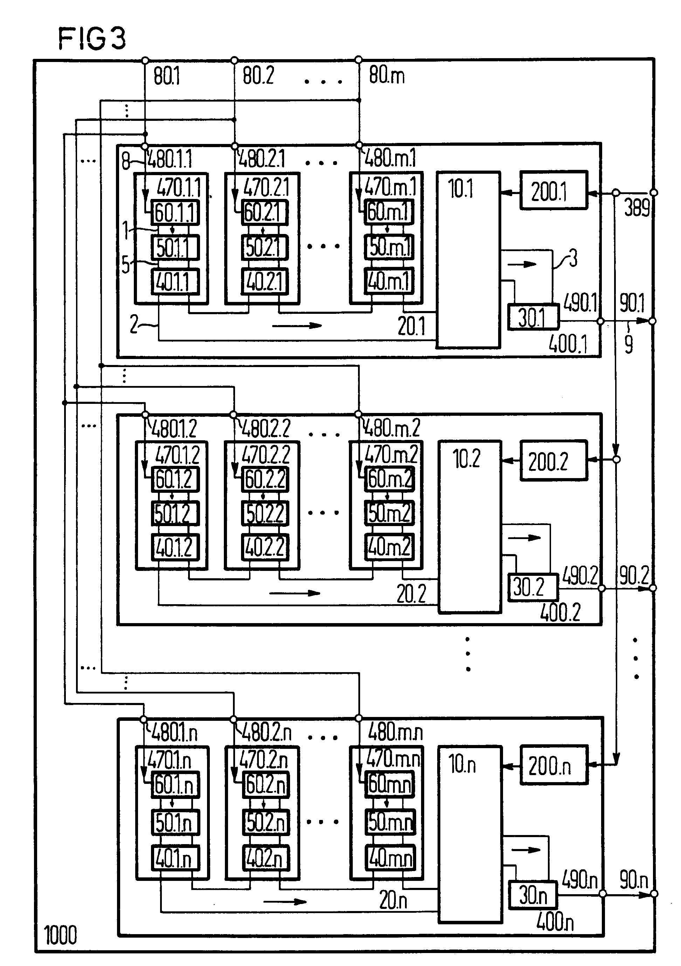

Wie die Figur 3 zeigt, besteht das erste Ausführungsbeispiel der Erfindung aus einer Vermittlungszentrale 5900 in Form von einer Schaltungsanordnung 1000, welche mehrere Eingänge 80, sowie mehrere Ausgänge 90, sowie mehrere Ausgangsmodule 400 aufweist. Die Ausgangsmodule 400 sind dabei identisch aufgebaut. Jeder Ausgangsmodul 400 weist mehrere Moduleingänge 480 auf und einen Modulausgang 490. Der erste Moduleingang 480.1 ist jeweils mit dem ersten Eingang 80.1 der Schaltungsanordnung 1000 verbunden, der zweite Moduleingang 480.2 mit dem zweiten Eingang 80.2, und weitere Moduleingänge 480 sind jeweils mit weiteren Eingängen 80 der Schaltungsanordnung 1000 verbunden. Der erste Moduleingang 480.1.2 des zweiten Ausgangsmoduls 400.2 ist mit dem ersten Eingang 80.1 der Schaltungsanordnung 1000 verbunden, der zweite Moduleingang 480.2.2 des zweiten Ausgangsmoduls 400.2 ist mit dem zweiten Eingang 80.2 der Schaltungsanordnung 1000 verbunden. Von den weiteren Ausgangsmodulen 400 sind ebenso jeweils die ersten Moduleingänge 480.1 mit dem ersten Eingang 80.1 der Schaltungsanordnung 1000 verbunden, und weitere Moduleingänge 480 der Ausgangsmodule 400 mit weiteren Eingängen 80 der Schaltungsanordnung 1000. Der Ausgang 490.1 des ersten Ausgangsmoduls 400.1 ist mit dem ersten Ausgang 90.1 der Schaltungsanordnung 1000 verbunden, der Ausgang 490.2 des zweiten Ausgangsmoduls 400.2 ist mit dem zweiten Ausgang 90.2 der Schaltungsanordnung 1000 verbunden, und die Ausgänge 490 der weiteren Ausgangsmodule 400 sind mit den weiteren Ausgängen 90 der Schaltungsanordnung 1000 verbunden.

Jeder Ausgangsmodul 400 weist für jeden Eingang 80 jeweils einen eigenen Eingangsteil 470 auf, welcher jeweils über den zugehörigen Moduleingang 480 mit dem zugehörigen Eingang 80 verbunden ist.

An den Eingängen 80 der Schaltungsanordnung 1000 sind serielle Datenpakete als Eingangssignale 8 eingebbar. Bei diesem Ausführungsbeispiel weisen diese eine Länge von 256 Bit auf, wobei die Richtungsinformation am Anfang des Datenpaketes enthalten ist. Aus der Richtungsinformation des Datenpaketes ist erkennbar, ob das Datenpaket auszublenden oder zu einem der Ausgänge 90 der Schaltungsanordnung 1000 weiterzuleiten ist. Ein beispielsweise am Eingang 80.1 eingegebenes Datenpaket wird seriell in je einem Eingangsteil 470.1 je eines Ausgangsmoduls 400 eingegeben, wo es jeweils von einem Eingangsschieberegister 60.1 seriell eingespeichert und parallel umgesetzt wird zu aufeinanderfolgenden Bitgruppen eines Bitgruppenpaketsignales 1. Bei diesem Ausführungsbeispiel wird das vorgesehene 256 Bit lange Datenpaket des Eingangssignales 8 in ein Bitgruppenpaketsignal 1 umgesetzt bestehend aus vier Bitgruppen zu je 64 Bit, wobei die Richtungsinformation in der ersten Bitgruppe enthalten ist, aus welcher der für die Weitergabe zutreffende Ausgang ermittelbar ist. Beginnend mit einem Pakettakt des Datenpaketes wird das Datenpaket des Eingangssignales 8 seriell in die Eingangsschieberegister 60.1 gemäß einem Bittakt des Datenpaketes eingegeben, wo es parallel gemäß einem Eingangsarbeitstakt weitergeleitet wird, welcher viermal so groß ist wie der Pakettakt. Mit einer Breite von 64 Bit wird das Bitgruppenpaketsignal 1 Bitgruppe für Bitgruppe gemäß einem Eingangsarbeitstakt in den Eingangsteilen 470.1 zu den Ausgangsfiltern 50.1 der Eingangsteile 470.1 weitergeleitet, wo die Richtungsinformation geprüft wird, und entweder alle Bitgruppen des Bitgruppenpaketsignales 1 ausgeblendet werden, oder aufeinanderfolgend gemäß dem Eingangsarbeitstakt an einen Eingangsspeicher 40.1 der Eingangsteile 470.1 als das Bitgruppenpaketsignal 5 weitergeleitet werden. Gemäß dem Eingangsarbeitstakt, welcher gleich ist dem Eingangsspeicherarbeitstakt, kann dort jeweils eine Bitgruppe des Bitgruppenpaketsignales 5 zwischengespeichert werden. Durch die Richtungsinformation ist festgelegt, daß das eingegebene Datenpaket genau zu einem der Ausgänge 90 oder zu keinem der Ausgänge 90 weiterzuleiten ist. Von jedem der Ausgangsfilter 50 der Ausgangsmodule 400 werden die Bitgruppen des Bitgruppenpaketsignales 1 jeweils nur dann als Bitgruppenpaketsignal 5 weitergeleitet, wenn aus der Richtungsinformation der dem Ausgangsmodul 400 zugeordnete Ausgang 90 erkannt ist. Ein an einem Eingang 80 eingegebenes Eingangssignal 8 wird demnach von genau einem oder keinem der Ausgangsfilter 50 weitergeleitet. Dadurch werden innere Blockierungen verhindert. In gleicher Weise wird ein an einem Eingang 80.2 eingegebenes Datenpaket in den Eingangsteilen 470.2 zu Bitgruppen eines Bitgruppenpaketsignales umgesetzt in den Eingangsschieberegistern 60.2 von den Ausgangsfiltern 50.2 bezüglich der Richtungsinformation geprüft, und in genau einem oder keinem der Eingangsspeicher 40.2 Bitgruppe für Bitgruppe gemäß dem Eingangsarbeitstakt zwischengespeichert.

In jedem Ausgangsmodul 400 ist ein eigener Bitgruppenbus 20 vorgesehen, durch welchen die in den Eingangsspeichern 40 zwischengespeicherten Bitgruppen des Bitgruppenpaketsignales 2 weitergeleitet werden gemäß einem Bitgruppenbusarbeitstakt, welcher gleich ist der Anzahl der Eingänge 80 multipliziert mit dem Eingangsarbeitstakt. Aus allen Eingangsspeichern 40 sind dadurch alle zwischengespeicherten Bitgruppenpaketsignale weiterleitbar. Jeder Eingangsspeicher weist dabei durch Zwischenspeicherung der Bitgruppen der Bitgruppenpaketsignale jeweils 8 Bitgruppenregister auf, so daß für maximal zwei Bitgruppenpaketsignale jeweils die Bitgruppen darin zwischenspeicherbar sind. Dabei erfolgt die Zwischenspeicherung der Bitgruppen nach einen first-in-first-out-Prinzip. Derartige Speicher sind allgemein bekannt und als Eingangsspeicher einsetzbar. Bei diesem Ausführungsbeispiel weist der Bitgruppenbus 20 eine Breite von 64 Bit auf. Es wird in zyklischer Folge aus jeweils einem der Eingangsspeicher 40 ein Bitgruppenpaketsignal mit allen Bitgruppen abgeholt und weitergegeben, sofern ein solches darin zwischengespeichert ist.

In jedem Ausgangsmodul 400 ist ein eigener Ausgangsspeicher 10 vorgesehen, in welchem in Bitgruppenregistern die weiterzuleitenden Bitgruppen der Bitgruppenpaketsignale 2 gespeichert werden. Bei diesem Ausführungsbeispiel weisen die Bitgruppenspeicherregister eine Breite von 64 Bit auf. Dies entspricht der Breite der Parallelisierung und ist gleich der Breite der Bitgruppe und gleich der Breite des Bitgruppenbusses. Der Speicherarbeitstakt ist gleich dem Bitgruppenbusarbeitstakt. Bei diesem Ausführungsbeispiel ist die Anzahl der Bitgruppenspeicherregister gleich viermal der Anzahl der Eingänge 80, also beispielsweose bei vier Eingängen 80 sind sechzehn Bitgruppenspeicherregister vorgesehen. Für jedes Bitgruppenpaketsignal 2 werden vier Bitgruppen gespeichert, sodaß insgesamt eine Anzahl von Bitgruppenpaketsignalen speicherbar ist gleich der Anzahl der Eingänge 80. Dabei erfolgt die Zwischenspeicherung der Bitgruppen nach einem first-in-first-out-Prinzip. Derartige Speicher sind allgemein bekannt und als Ausgangsspeicher einsetzbar.

Werden beispielsweise am Eingang 80.1 und am Eingang 80.2 gleichzeitig zwei Datenpakete eingegeben, deren Weiterleitung für beide zum Ausgang 90.1 vorgesehen ist, so wird für beide jeweils die erste Bitgruppe des jeweiligen Bitgruppenpaketsignales in den Eingangsspeichern 40.1.1 und 40.2.1 beim Eingangsarbeitstakt zwischengespeichert. Beim nächsten darauffolgenden Bitgruppenbusarbeitstakt bildet die im Eingangsspeicher 40.1.1 zwischengespeicherte Bitgruppe noch kein komplettes Bitgruppenpaketsignal, so daß durch den Bitgruppenbus 20.1 dies erkannt wird und eine Weitergabe zunächst noch nicht durchgeführt wird, bis alle Bitgruppen eine Bitgruppenpaketsignals im Eingangsspeicher zwischengespeichert sind. Beim nächstfolgenden Eingangsarbeitstakt werden jeweils die zweiten Bitgruppen der Bitgruppenpaketsignale in den Eingangsspeichern 40.1.1 und 40.2.1 zwischengespeichert. Beim nächstfolgenden Eingangsarbeitstakt werden jeweils die dritten Bitgruppen der Bitgruppenpaketsignale in den Eingangsspeichern 40.1.1 und 40.2.1 zwischengespeichert. Beim nächstfolgenden Eingangsarbeitstakt werden jeweils die vierten Bitgruppen der Bitgruppenpaketsignale in den Eingangsspeichern 40.1.1 und 40.2.1 zwischengespeichert. Danach werden durch den Bitgruppenbus 20.1 mit jeweils den nächstfolgenden vier Bitgruppenbusarbeistakten die vier Bitgruppen des Bitgruppenpaketsignals aus dem Eingangsspeicher 40.1.1 ausgelesen und jeweils in den Ausgangsspeicher 10.1 eingelesen und gespeichert. Danach werden durch den Bitgruppenbus 20.1 mit jeweils den nächstfolgenden vier Bitgruppenbusarbeitstakten die vier Bitgruppen des Bitgruppenpaketsignales aus dem Eingangsspeicher 40.2.1 ausgelesen und jeweils in den Ausgangsspeicher 10.1 eingelesen und gespeichert. Danach wird vom Ausgangsspeicher 10.1 jeweils zum Ausgangsarbeitstakt eine Bitgruppe ausgegeben und bei diesem Ausführungsbeispiel mit einer Breite von 64 Bit parallel in das Ausgangsschieberegister 30.1 eingelesen. Vom Ausgangsschieberegister 30.1 wird die Bitgruppe mit dem Bittakt seriell ausgelesen und als Ausgangssignal 9 am Ausgang 90.1 ausgegeben. Nach einem first-in-first-out-Prinzip werden die in den Ausgangsspeichern eingelesenen Bitgruppen in die Ausgangsschieberegister ausgelesen.

In jedem Ausgangsmodul 400 werden jeweils die Bitgruppen durch den Ausgangsspeicher 10 an einen Ausgangssignalformumsetzer 30 jedes Ausgangsmoduls 400 ausgegeben. In jeweils einem Ausgabeschieberegister 30 jedes Ausgangssignalformumsetzers 30 werden die Bitgruppen des Bitgruppenpaketsignales 3 jeweils parallel eingegeben zum Ausgangsarbeitstakt, und gemäß dem Bittakt werden seriell die Datenpakete des Ausgangssignales 9 gebildet und über die Modulausgänge an den jeweiligen Ausgang 90 abgegeben.

In jedem Ausgangsmodul 400 ist eine Arbeitstakteinheit 200 vorgesehen, durch welche für den jeweiligen Ausgangsmodul 400 der Pakettakt, der Bittakt, der Eingangsarbeitstakt, der Ausgangsarbeitstakt, der Bitgruppenbusarbeitstakt oder Eingangsspeichertakt und der Ausgangsspeicherarbeitstakt synchronisiert und aufbereitet werden.

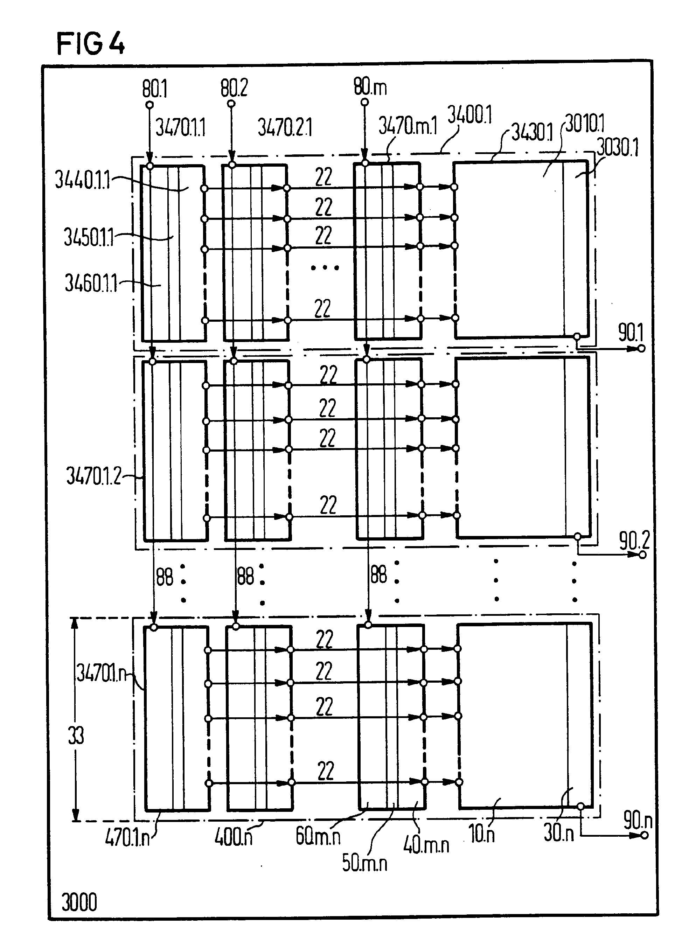

Wie die Figur 4 zeigt ist die Schaltungsanordnung 1000 gemäß Figur 3 auf einer einzigen Halbleiterscheibe 3000 bei diesem Ausführungsbeispiel aufgebaut. Dabei wird ein nachfolgend beschriebener Floorplan verwendet. Die Ausgangsmodule 400 sind in registerbereichsbreiten rechteckförmigen Modulbereichen 3400 nebeneinanderliegend angeordnet. Jeder Modulbereich 3400 enthält jeweils einen Ausgangsbereich 3430, sowie zu jedem Eingang 80 je einen Eingangsbereich 3470. Der registerbereichsbreite rechteckförmige Ausgangsbereich 3430 enthält jeweils das Ausgangsschieberegister 30 in einem Registerbereich 3030 und den Ausgangsspeicher 10 in einem Speicherbereich 3010. Jeder Eingangsbereich 3470 enthält jeweils in einem Eingangsschieberegisterbereich 3460 das Eingangsschieberegister 60, den Ausgangsfilter 50 in einem Ausgangsfilterbereich 3450, und die Bitgruppenregister des Eingangsspeichers 40 in einem Bitgruppenregisterbereich 3440. Die Registerbereichsbreite 33 ist dadurch bestimmt, daß bei diesem Ausführungsbeispiel die Bitgruppe die Bitanzahl 64 aufweist, und daß die jeweils ein Bit speichernden Flip-Flop der die Bitgruppen speichernden Register, beispielsweise Eingangsschieberegister, Bitgruppenregister der Eingangsspeicher, Bitgruppenspeicherregister der Ausgangsspeicher, Ausgangsschieberegister, in einer Reihe zumindest näherungsweise angeordnet sind. Diese Register sind jeweils in einem rechteckförmigen Bereich angeordnet, dessen eine Rechteckseite der Registerbereichsbreite 33 entspricht.

Diese Register sind Registerbereichsbreite 33 an Registerbereichsbreite 33 nebeneinanderliegend angeordnet. Dadurch ergeben sich für die Weiterleitung eines Bits aus einem Register in das entsprechende Bit des anderen Registers besonders kurze Leitungsverbindungen, sowie besonders kurze Signallaufzeiten. Dies betrifft insbesondere den Bitgruppenbus, welcher bei diesem Ausführungsbeispiel jeweils aus 64 Leitungsverbindungen 22 besteht, auf denen die Bits der Bitgruppen parallel weitergeleitet werden. Die Verbindung der Eingänge 80 mit den Moduleingängen erfolgt über Eingangsverbindungen 88. Bei diesem Floorplan ergibt sich eine besonders optimale Flächenausnutzung auf der Halbleiterscheibe.

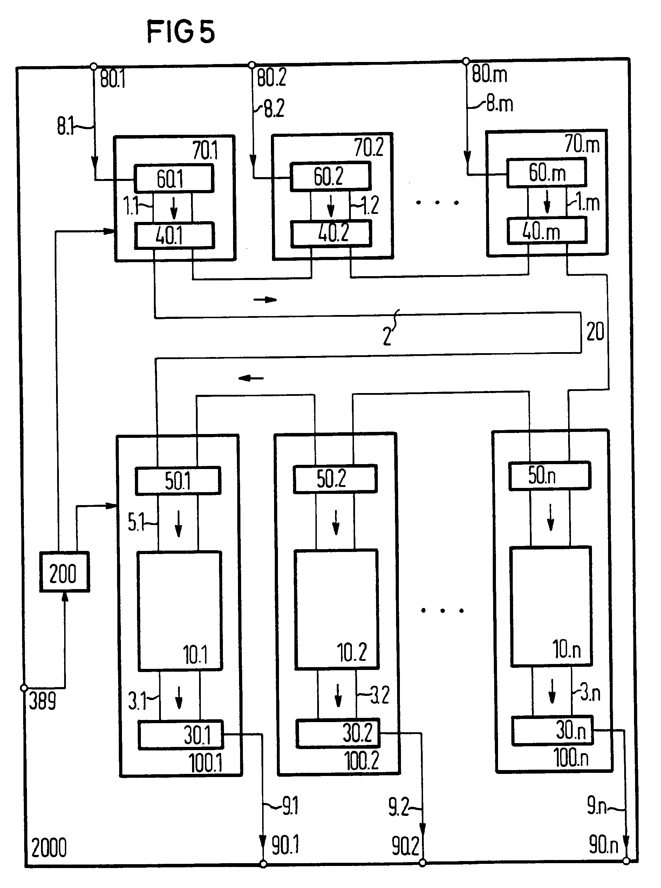

Wie die Figur 5 zeigt, besteht das zweite Ausführungsbeispiel der Erfindung aus einer Vermittlungszentrale 5900 in Form von einer Schaltungsanordnung 2000, welche mehrere Eingänge 80 sowie mehrere Ausgänge 90 aufweist. Jeder der Eingänge 80 ist mit genau einer Eingangsstufe 70 verbunden, welche ein Eingangsschieberegister 60 und einen Eingangsspeicher aufweist, welcher aus genau einem Bitgruppenregister 40 besteht. Zu jedem der Ausgänge 90 ist eine Ausgangsstufe 100 vorgesehen, welche ein Ausgangsfilter 50, einen Ausgangsspeicher 10 sowie ein Ausgangsschieberegister 30 als Ausgangssignalformumsetzer aufweist. Das Bitgruppenweitergabemittel weist einen Bitgruppenbus 20 auf, welcher die Eingangsstufen 70 mit den Ausgangsstufen 100 verbindet.

An den Eingängen 80 der Schaltungsanordnung 2000 sind serielle Datenpakete als Eingangssignale 8 eingebbar, welche bei diesem Ausführungsbeispiel eine Länge von 128 Bit aufweisen, wobei die Richtungsinformation im Datenpaket enthalten ist. Aus der Richtungsinformation des Datenpaketes ist erkennbar, ob das Datenpaket auszublenden oder zu einem der Ausgänge 90 der Schaltungsanordnung 2000 weiterzuleiten ist. Ein beispielsweise am Eingang 80.1 eingegebenes Datenpaket 8.1 wird seriell in die Eingangsstufe 70.1 eingegeben, wo es vom Eingangsschieberegister 60.1 seriell eingespeichert und parallel umgesetzt wird zu genau einer Bitgruppe des Bitgruppenpaketsignales 1.1, welches bei diesem Ausführungsbeispiel genau eine Bitgruppe von 128 Bit ist. Beginnend mit einem Pakettakt des Datenpaketes wird das Datenpaket seriell in das Eingangsschieberegister 60.1 gemäß einem Bittakt des Datenpaketes eingegeben, wo es parallel in das Bitgruppenregister 40.1, welches als Eingangsspeicher bei diesem Ausführungsbeispiel verwendet wird, gemäß einem Eingangsarbeitstakt weitergeleitet wird, welcher gleich dem Pakettakt bei diesem Ausführungsbeispiel ist. Gemäß einem Bitgruppenbusarbeitstakt, welcher bei diesem Ausführungsbeispiel gleich ist der Anzahl der Eingänge 80 multipliziert mit dem Pakettakt, werden die in den Bitgruppenregistern 40 zwischengespeicherten Bitgruppenpaketsignale 1 vom Bitgruppenbus 20 weitergeleitet, sodaß aus allen Bitgruppenregistern 40 alle zwischengespeicherten Bitgruppenpaketsignale weiterleitbar sind zwischen zwei Eingangsarbeitstakten. Bei diesem Ausführungsbeipiel weisen der Bitgruppenbus 20, und alle Register, die zur Zwischenspeicherung oder Speicherung der Bitgruppe des Bitgruppenpaketsignales vorgesehen sind, also die Eingangsschieberegister 60, die Bitgruppenregister 40 die Ausgangsschieberegister 30 sowie die Bitgruppenspeicherregister der Ausgangsspeicher 10 eine Breite von 128 Bit auf. Bei jedem Bitgruppenbusarbeitstakt wird in zyklischer Folge jeweils eines der Bitgruppenregister der Eingangsspeicher 40 abgefragt. Vom Bitgruppenbus 20 wird mit demselben Bitgruppenbusarbeitstakt aus einem der Bitgruppenregister 40 eine Bitgruppe 2 über die den Ausgangsspeichern 10 unmittelbar vorgeschalteten Ausgangsfilter 50 jeweils gleichzeitig an alle Ausgangsspeicher 10 weitergeleitet. Jedem der Ausgänge 90 ist jeweils ein Ausgangssignalformumsetzer 30 sowie ein Ausgangsspeicher 10 und ein Ausgangsfilter 50 vorgeschaltet, welche jeweils die diesem Ausgang 90 zugeordnete Ausgangsstufe 100 bilden. Anhand der Richtungsinformation der vom Bitgruppenbus 20 weitergeleiteten Bitgruppe 2 prüft der Ausgangsfilter 50, ob die Bitgruppe 2 zum zugeordneten Ausgang 90 weiterzuleiten oder auszublenden ist. Dadurch wird erreicht, daß im Ausgangsspeicher 10 jeweils nur jene Bitgruppen gespeichert werden, deren Weitergabe für den zugeordneten Ausgang 90 vorgesehen ist. So wird beipielsweise eine im Bitgruppenregister 40.1 zwischengespeicherte Bitgruppe zufolge ihrer Richtungsinformation bei diesem Ausführungsbeipiel in keinem oder in genau einem der Ausgangsspeicher 10 gespeichert.

Jeder der Ausgangsspeicher 10 ist identisch aufgebaut. Bei jeder Speichereingabe wird eine Bitgruppe, und damit ein vollständiges Bitgruppenpaketsignal 5 gespeichert. Bei jeder Speichereingabe wird zusätzlich geprüft, ob zur Speicherung der Bitgruppe ein Bitgruppenspeicherregister frei ist. Für den Fall, daß in jedem Bitgruppenspeicherregister eines Ausgangsspeichers 10 jeweils eine Bitgruppe gespeichert ist, unterbleibt für den jeweiligen Ausgangsspeicher die Speicherung der einzuspeichernden Bitgruppe, und der Verlust dieser Bitgruppe ist die Folge. Bei diesem Ausführungsbeispiel weisen die Bitgruppenspeicherregister eine Breite von 128 Bit auf. Dies entspricht der Breite der Parallelisierung und ist gleich der Breite der Bitgruppe 2 und gleich der Breite des Bitgruppenbusses 20. Bei diesem Ausführungsbeispiel ist die Anzahl der Bitgruppenspeicherregister gleich der Anzahl der Eingänge 80, also beispielsweise sind bei vier Eingängen 80 zu jedem Ausgangsspeicher jeweils vier Bitgruppenspeicherregister vorgesehen. Die Speicherausgabe erfolgt zum Ausgangsarbeitstakt.

Nach einem first-in-first-out-Prinzip werden Bitgruppen in die Bitgruppenregister des Ausgangsspeichers 10 bei diesem Ausführungsbeispiel eingelesen und ausgelesen. Bei diesem Ausführungsbeispiel arbeitet der Ausgangsspeicher nach einem firstin-first-out-Prinzip. Derartige Speicher sind allgemein bekannt und als Ausgangsspeicher einsetzbar.

Die Bitgruppen 3 werden jeweils durch die Ausgangsspeicher 10 an die Ausgangsschieberegister 30 der Ausgangssignalformumsetzer parallel mit einer Breite von 128 Bit ausgegeben.

Wird beipielsweise am Eingang 80.1 und am Eingang 80.2 gleichzeitig jeweils ein Datenpaket 8 beginnend mit dem Datenpakettakt seriell eingegeben, so wird das erste Datenpaket 8.1 im Eingangsschieberegister 60.1, und das zweite Datenpaket 8.2 im Eingangsschieberegister 60.2 seriell eingelesen. Zum nächstfolgenden Pakettakt, welcher gleich dem Eingangsarbeitstakt ist, wird gleichzeitig das erste Datenpaket 8.1 vom Eingangsschiebe register 60.1 als Bitgruppe 1.1 in das Bitgruppenregister 40.1, und das zweite Datenpaket 8.2 vom Eingangsschieberegister 60.2 als Bitgruppe 1.2 in das Bitgruppenregister 40.2 jeweils parallel mit einer Breite von 128 Bit weitergeleitet, und dort zwischengespeichert. Aufgrund der Richtungsinformation sind bei diesem Ausführungsbeispiel beide zwischengespeicherten Bitgruppen zur Weiterleitung zum Ausgang 90.1 vorgesehen. Zum nächstfolgenden Bitgruppenbusarbeitstakt wird die Bitgruppe 1.1 vom Bitgruppenregister 40.1 durch den Bitgruppenbus 20 gleichzeitig an alle Ausgangsfilter 50 weitergeleitet.

Während nur der Ausgangsfilter 50.1 die Weitergabe freigibt, blockieren alle anderen Ausgangsfilter 50.2,...50.n die Weitergabe der Bitgruppe 1.1 als Bitgruppe 5.1. Zu diesen Bitgruppenbusarbeitstakt wird daher die Bitgruppe 5.1 in den Ausgangsspeicher 10.1 eingelesen und gespeichert in einem Bitgruppenspeicherregister. Zum nächstfolgenden Bitgruppenbusarbeitstakt wird die im Bitgruppenregister 40.2 zwischengespeicherte Bitgruppe 1.2 durch den Bitgruppenbus 20 ebenso an alle Ausgangsfilter 50 weitergeleitet. Ebenso wird vom Ausgangsfilter 50.1 die Weitergabe freigegeben, während die anderen Ausgangsfilter 50.2,...50.n die Weitergabe blockieren. Diese Bitgruppe wird ebenso im Ausgangsspeicher 10.1 gespeichert. Zum nächstfolgenden Pakettakt, welcher bei diesem Ausführungsspiel gleich ist dem Eingangsarbeitstakt, und ebenso gleich ist dem Ausgangsarbeitstakt, erfolgt die Ausgabe der ersten Bitgruppe 3.1 aus dem Ausgangsspeicher 10.1. Diese wird in das Ausgangsschieberegister 30.1 des Ausgangssignalformumsetzers parallel eingegeben, und gemäß dem Bittakt an den Ausgang 90.1 in Form eines seriellen Datenpaketes 9.1 abgegeben. Zum nächstfolgenden Ausgangsarbeitstakt wird die zweite gespeicherte Bitgruppe vom Ausgangsspeicher 10.1 an das Ausgangsschiebereigster 30.1 parallel ausgegeben. Diese wird ebenso gemäß dem Bittakt an den Ausgang 90.1 in Form eines seriellen Datenpaketes abgegeben.

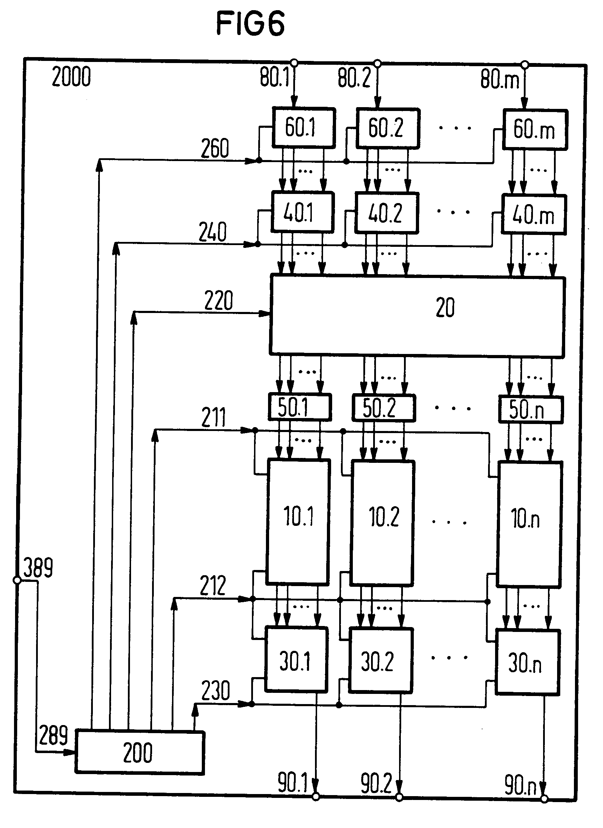

Wie die Figur 6 zeigt, ist bei diesem Ausführungsbeispiel für die Schaltungsanordnung 2000 eine eigene Arbeitstakteinheit 200 vorgesehen, durch welche aus dem am Takteingang 389 eingegebenen Taktsignal 289 des taktsynchronen Datennetzes ein Eingangsarbeitstakt 240, ein Ausgangsarbeitstakt 212, ein Bitgruppenbusarbeitstakt 220, ein Ausgangsspeicherarbeitstakt 211, und ein Bittakt 260 für die Eingangsschieberegister 60, welcher gleich ist dem Bittakt 230 für die Ausgangsschieberegister 30, synchronisiert und aufbereitet werden.

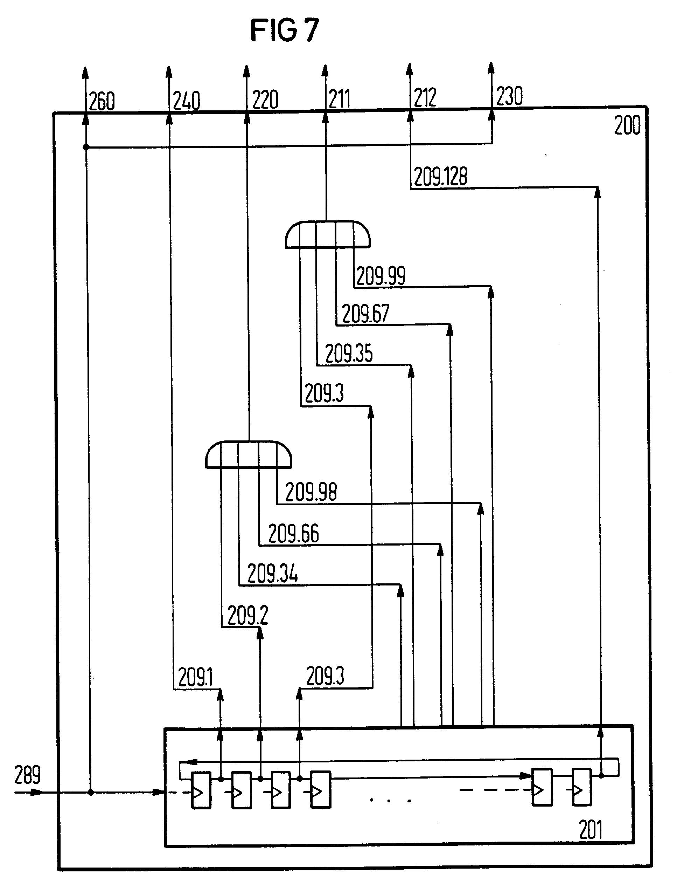

Wie die Figur 7 zeigt, ist in der Arbeitstakteinheit 200 ein Taktschieberegister 201 vorgesehen, in welchem bis auf eine Zelle für alle übrigen Zellen der Inhalt gelöscht ist, und bei welchem der gesetzte Inhalt durch das Taktsignal 289 Zelle für Zelle weitergeschoben wird und von der letzten Zelle an die erste Zelle eingegeben wird. Die Anzahl der Zellen ist dabei gleich der Bitanzahl des Bitgruppenpaketsignals. Mit dem eintreffen des ersten Bits des Eingangssignals am Eingang 80 wird die erste Zelle des Taktschieberegisters 201 gesetzt. Die Bittakte 230 und 260 werden vom Taktsignal 289 abgeleitet. Der Eingangsarbeitstakt 240 wird vom Zellenausgang 209.1 der ersten Zelle abgeleitet. Der Ausgangsarbeitstakt 212 wird vom Zellenausgang 209.128 der letzten Zelle abgeleitet. Der Bitgruppenbusarbeitstakt 220 wird vom Zellenausgang 209.2 der zweiten Zelle abgeleitet, und er wird verordert mit weiteren Zellenausgängen in gleichmäßiger Verteilung auf dem Taktschieberegister 201, abhängig von der Anzahl der Eingänge 80. Beispielsweise bei vier Eingängen 80 werden zur Bildung des Bitgruppenbusarbeitstaktes 220 die Zellenausgänge 209.2, 209.34, 209.66 und 209.98 verodert. Der Ausgangsspeicherarbeitstakt 211 wird vom Zellenausgang 209.3 der dritten Zelle abgeleitet, und er wird verodert mit weiteren Zellenausgängen in gleichmäßiger Verteilung auf dem Taktschieberegister 201, abhängig von der Anzahl der Eingänge 80. Beispielsweise bei vier Eingängen 80 werden zur Bildung des Ausgangsspeicherarbeitstaktes 211 die Zellenausgänge 209.3, 209.35, 209.67 und 209.99 verodert.

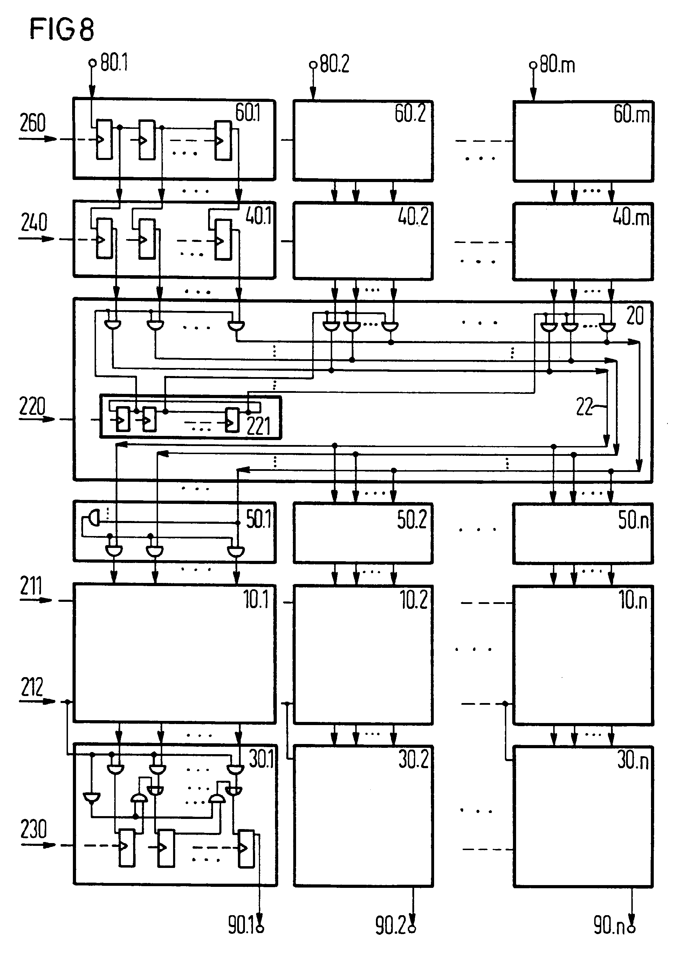

Wie die Figur 8 zeigt, werden die Eingangsschieberegister vom Bittakt 260 angesteuert. Beginnend mit dem Pakettakt wird das erste Bit des seriellen Eingangssignales am Eingang 80 eingelesen. Mit dem Bittakt 260 wird das Eingangssignal in die Zellen des Eingangsschieberegisters 60 eingelesen. Unmittelbar vor dem nächstfolgenden Pakettakt sind alle Bits des seriellen Eingangssignals in das Eingangsschieberegister 60 eingelesen und werden an den Zellenausgängen des Eingangsschieberegisters 60 ausgegeben, wobei das erste Bit des Eingangssignales in der rechts dargestellten Zelle gespeichert ist und das letzte Bit des Eingangssignales in der links dargestellten Zelle gespeichert ist. Mit dem Eingangsarbeitstakt 240 wird dieser Inhalt in das Bitgruppenregister 40 übernommen und dort zwischengespeichert. Der Bitgruppenbusarbeitstakt 220 steuert ein Auswahlschieberegister 221 an. Dieses weist ebensoviele Zellen auf, wie Eingänge 80 vorgesehen sind, wobei der Inhalt bis auf eine gesetzte Zelle für alle anderen Zellen gelöscht ist. Zwischen zwei Eingangsarbeitstakten 240 werden der Reihe nach für jedes der Bitgruppenregister 40 die Sperrgatter geöffnet, so daß der zwischengespeicherte Inhalt auf die Leitungsverbindungen 22 des Bitgruppenbusses 20 ausgegeben wird und jeweils an alle Ausgangsfilter 50 weitergeleitet wird. Jeder Ausgangsfilter 50 besteht aus Sperrgatter, welche über eine logische Verknüpfung geöffnet werden können, gemäß einer Überprüfung der ersten acht Bit des Bitgruppenpaketsignales, in welchem bei diesem Ausführungsbeispiel die Richtungsinformation enthalten ist. Das erste Bit des Bitgruppenpaketsignales ist bei diesem Ausführungsbeispiel gesetzt bei einem gültigen Bitgruppenpaketsignal. Bei einer Blockierung der Weitergabe des Bitgruppenpaketsignales wird insbesondere anstelle dieses gesetzten Bits ein gelöschtes Bit von den Sperrgattern weitergegeben. Der nachgeschaltete Ausgangsspeicher 10 erkennt an diesem Bit, welches auch häufig Kennbit oder Aktivbit genannt wird, ob ein gültiges Bitgruppenpaketsignal weitergeleitet wird und zu speichern ist oder nicht. Mit dem Ausgangsspeicherarbeitstakt 211 wird bei gesetztem Kennbit das Bitgruppenpaketsignal in den Ausgangsspeicher eingelesen und gespeichert. Mit dem Ausgangsarbeitstakt 212 wird ein gespeichertes Bitgruppenpaketsignal aus dem Ausgangsspeicher 10 ausgelesen, in das nachgeschaltete Ausgangsschieberegister 30. Dabei wird der Ausgangsarbeitstakt 212 im Ausgangsschieberegister 30 verwendet zur Umschaltung von der seriellen Weitergabe zur parallelen Eingabe des Bitgruppenpaketsignals, wobei die jeweiligen Sperrgatter dabei umgeschaltet werden. Gemäß dem Bittakt 230 wird vom Ausgangssschieberegister 30 ein eingegebenes Bitgruppenpaketsignal an den Ausgang 90 ausgegeben.

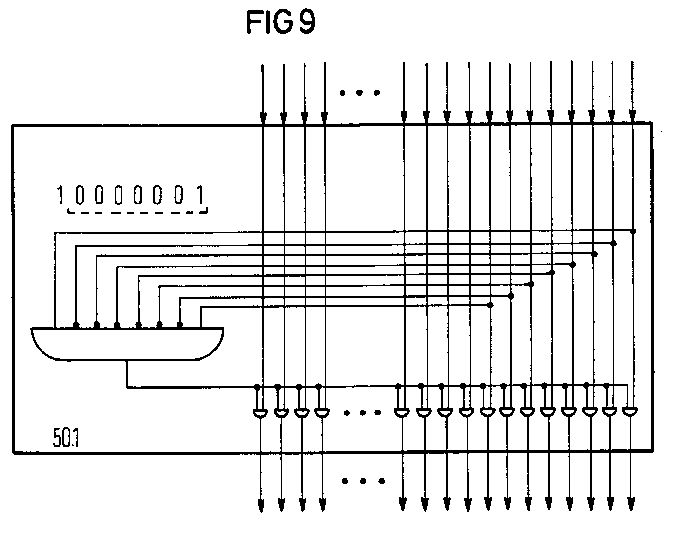

Wie die Figur 9 zeigt, werden die Sperrgatter des Ausgangsfilters 50 angesteuert über ein logisches UND-Verknüpfungsglied zur Verknüpfung der ersten acht Bitgruppenpaketsignales. Dabei wird das erste Bit, welches rechts dargestellt ist, auf ein gesetztes Bit geprüft. Die nächstfolgenden sieben Bits werden auf die Richtungsinformation überprüft, welche dem dem Ausgangsfilter 50 zugeordneten Ausgang 90 entspricht. Ein gelöschtes Bit wird dabei an einem Invertierungseingang des UND-Verknüpfungsgliedes überprüft. So wird bei diesem Ausführungsbeispiel die Richtungsinformation durch den ersten Ausgangsfilter 50.1, welcher dem ersten Ausgang 90.1 zugeordnet ist, auf den Binärwert 10000001 überprüft. Dies entspricht dem gesetzten Kennbit und der Binärzahl 1 für den ersten Ausgang 90.1 bei diesem Ausführungsbeispiel.

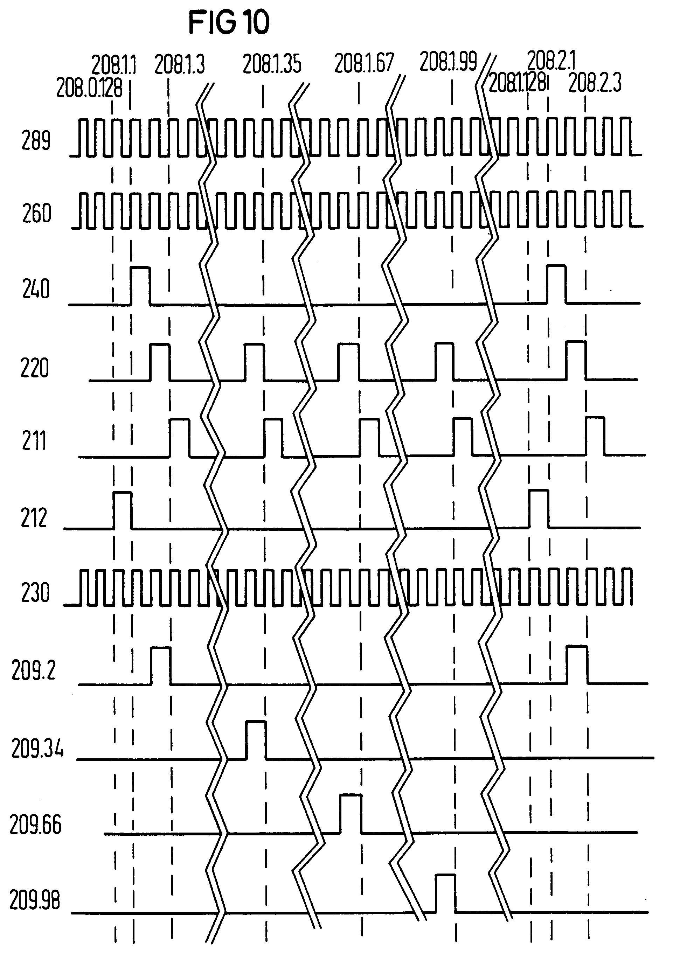

Wie die Figur 10 zeigt, können bis zu einem Taktzeitpunkt 208.0.128 seriell in die Eingangsschieberegister 30 bei einer Schaltungsanordnung 2000 mit vier Eingängen 80 eingegebene Eingangssignale mit dem Eingangsarbeitstakt 240 in die Bitgruppenregister 40 eingelesen werden. Zu einem Taktzeitpunkt 208.1.3 kann das Bitgruppenpaketsignal des ersten Bitgruppenregisters 40.1 über die Leitungsverbindungen 22 des Bitgruppenbusses 20 zu den Ausgangsfiltern 50 weitergeleitet werden, so daß es mit dem Ausgangsspeicherarbeitstakt 211 in einen der Ausgangsspeicher 10 einlesbar ist. Zu einem Taktzeitpunkt 208.1.35 kann das Bitgruppenpaketsignal des zweiten Bitgruppenregisters 40.2 über die Leitungsverbindungen 22 zu den Ausgangsfiltern 50 weitergeleitet werden, so daß es mit dem Ausgangsspeicherarbeitstakt 211 in einen der Ausgangsspeicher 10 einlesbar ist. Zu einem Taktzeitpunkt 208.1.67 kann das Bitgruppenpaketsignal des dritten Bitgruppenregisters 40.3 über die Leitungsverbindungen 22 zu den Ausgangsfiltern 50 weitergeleitet werden, so daß es mit dem Ausgangsspeicherarbeitstakt 211 in einen der Ausgangsspeicher 10 einlesbar ist. Zu einem Taktzeitpunkt 208.1.99 kann das Bitgruppenpaketsignal des vierten und letzten Bitgruppenregisters 40.4 dieses Ausführungsbeispieles über die Leitungsverbindungen 22 zu den Ausgangsfiltern 50 weitergeleitet werden, so daß es mit dem Ausgangsspeicherarbeitstakt 211 in einen der Ausgangsspeicher 10 einlesbar ist. Dadurch können alle vier Eingangssignale, welche zwischen den Taktzeitpunkten 208.0.1 und 208.0.128 an den vier Eingängen 80 seriell eingebbar sind, bis zum Taktzeitpunkt 208.1.128 in Ausgangsspeichern 10 gespeichert werden. Zum Taktzeitpunkt 208.1.128 können Bitgruppenpaketsignale aus den Ausgangsspeichern 10 mit dem Ausgangsarbeitstakt 212 in die Ausgangsschieberegister 30 weitergeleitet werden. Von den Ausgangsschieberegistern 30 können die Ausgangssignale, beginnend mit dem Taktzeitpunkt 208.2.1 seriell ausgegeben werden.

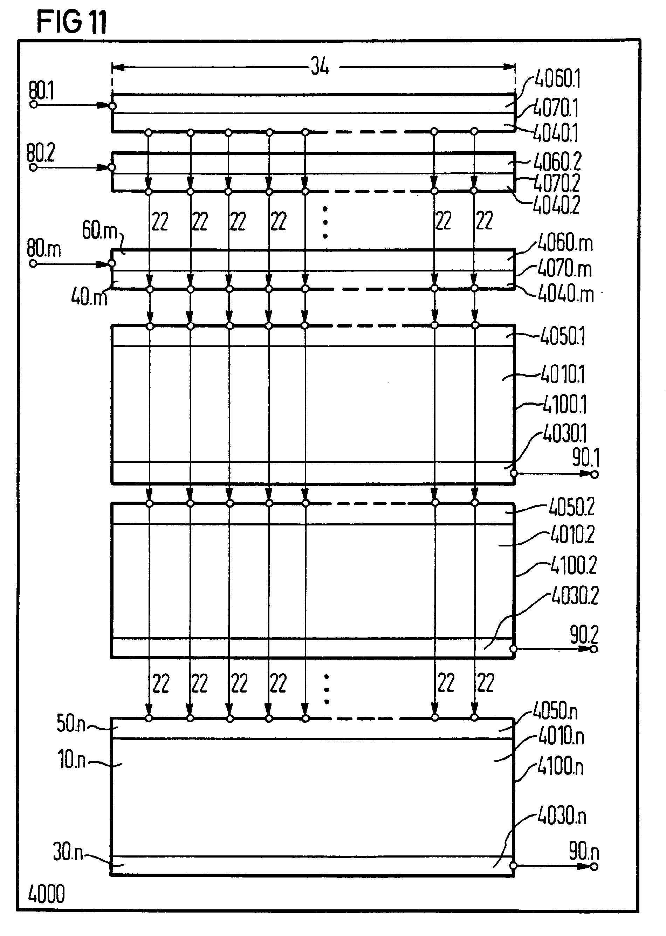

Wie die Figur 11 zeigt ist die Schaltungsanordnung 2000 gemäß Figur 2 auf einer einzigen Halbleiterscheibe 4000 bei diesem Ausführungsbeispiel aufgebaut. Dabei wurde nachfolgender Floorplan verwendet. Zu jedem Eingang 80 ist jeweils ein eigener registerbereichsbreiter rechteckförmiger Eingangsstufenbereich 4070 vorgesehen. Im Eingangsstufenbereich 4070 ist jeweils das Eingangsschieberegister 60 in einem registerbereichsbreiten rechteckförmigen Eingangsschieberegisterbereich 4060 und jeweils das Bitgruppenregister 40, welches als Eingangsspeicher verwendet wird, in einem registerbereichsbreiten rechteckförmigen Bitgruppenregisterbereich 4040 vorgesehen. Zu jedem Ausgang 90 ist jeweils ein eigener Ausgangsstufenbereich 4100 vorgesehen. Im Ausgangsstufenbereich 4100 ist jeweils der Ausgangsfilter 50 in einem eigenen Ausgangsfilterbereich 4050, jeweils der Ausgangsspeicher 10 in einem eigenen registerbereichsbreiten rechteckförmigen Ausgangsspeicherbereich 4010, und jeweils das Ausgangsschieberegister 30 in einem eigenen registerbereichsbreiten rechteckförmigen Ausgangsschieberegisterbereich 4030 vorgesehen. Die Registerbereichsbreite 34 ist dadurch bestimmt, daß bei diesem Ausführungsbeispiel die Bitgruppe die Bitanzahl 128 aufweist, und daß die jeweils ein Bit speichernden Flip-Flop der die Bitgruppen speichernden Register, beispielsweise das Eingangsschieberegister, das Bitgruppenregister des Eingangsspeichers, das Bitgruppenspeicherregister des Ausgangsspeichers, das Ausgangsschieberegister in einer Reihe zumindest näherungsweise angeordnet sind. Diese Register sind jeweils in einem rechteckförmigen Bereich angeordnet, dessen eine Rechteckseite der Registerbereichsbreite 34 entspricht. Diese Register sind Registerbereichsbreite 34 an Registerbereichsbreite 34 nebeneinanderliegend angeordnet. Dadurch ergeben sich für die Weiterleitung eines Bits aus einem Register in das entsprechende Bit des anderen Registers besonders kurze Leitungsverbindungen 22, sowie besonders kurze Signallaufzeiten. Dies betrifft insbesondere den Bitgruppenbus, welcher bei diesem Ausführungsbeispiel aus 128 Leitungsverbindungen 22 besteht, auf welchen die Bits der Bitgruppen parallel weitergeleitet werden.

Aus diesem Floorplan ergibt sich eine besonders optimale Flächenausnutzung auf der Halbleiterscheibe.

## Patentansprüche

1. Schaltungsanordnung mit wenigstens einem Eingang und wenigstens einem Ausgang zu einer Weitergabe eines filterbaren parallelisierbaren digitalisierbaren Eingangssignales mit folgenden Merkmalen:
a) das an einem Eingang (80) der Schaltungsanordnung (1000, 2000) eingebbare Eingangssignal (8) ist zuführbar einem Eingangssignalformumsetzer (60) zu einer Eingangsumformung in ein zumindest teilweise parallelisiertes Bitgruppenpaketsignal (1) bestehend aus wenigstens einer parallelen Bitgruppe,
b) einem Ausgang (90) der Schaltungsanordnung (1000, 2000) vorgeschaltet ist ein Ausgangssignalformumsetzer (30) zu einer Ausgangsumformung des Bitgruppenpaketsignals (3) in ein am Ausgang (90) abgebbares Ausgangssignal (9),
c) zur parallelen Weitergabe der Bitgruppen vom Eingangssignalformumsetzer (60) zum Ausgangssignalformumsetzer (30) ist ein Weitergabemittel (20) vorgesehen,
d) zu einer Zwischenspeicherung von wenigstens einer der Bitgruppen des Bitgruppenpaketsignales ist ein Zwischenspeicher (40) vorgesehen,
e) zu einer filterbaren Weitergabe des Bitgruppenpaketsignales ist ein Ausgangsfilter (50) vorgesehen, von welchem der für die Weitergabe zutreffende Ausgang aus dem Bitgruppenpaketsignal zu ermitteln ist.

2. Schaltungsanordnung nach Anspruch 1, **dadurch ge****gekennzeichnet**, daß eine Eingangssignalform des Eingangssignales (8) und eine Ausgangssignalform des Ausgangssignales (9) gleich sind und ein taktgesteuertes, serielles, digitales und elektronisches Datenpaket sind.

3. Schaltungsanordnung nach einem der Ansprüche 1 oder 2 **gekennzeichnet** durch ein Ausgangsschieberegister (30) des Ausgangssignalformumsetzers, in welches das Bitgruppenpaketsignal bitgruppenweise parallel eingebbar ist, und aus welchem das Ausgangssignal seriell abgebbar ist.

4. Schaltungsanordnung nach einen der Ansprüche 1 bis 3, **gekennzeichnet** durch ein Eingangsschieberegister des Eingangssignalformumsetzers, in welches das Eingangssignal seriell eingebbar ist, und aus welchem das Bitgruppenpaketsignal bitgruppenweise parallel abgebbar ist.

5. Schaltungsanordnung nach einem der Ansprüche 1 bis 4, **dadurch gekennzeichnet**, daß das Weitergabemittel (20) einen Bitgruppenbus aufweist.

6. Schaltungsanordnung nach einem der Ansprüche 1 bis 5, **gekennzeichnet** durch einen Bitgruppenspeicher (10) des Weitergabemittels zu einer Speicherung der Bitgruppen in Bitgruppenspeicherregistern.

7. Schaltungsanordnung nach Anspruch 6**,** **dadurch gekennzeichnet**, daß im Bitgruppenspeicher (10) eine Paketanzahl der Bitgruppenpaketsignale gleich der Anzahl der Eingänge speicherbar ist.

8. Schaltungsanordnung nach Anspruch 6 oder 7, **gekennzeichnet** **durch** zumindest ein Indexregister des Bitgruppenspeichers (10) zu einer Adressierung der Bitgruppenspeicherregister.

9. Schaltungsanordnung nach einem der Ansprüche 6 bis 8, **dadurch gekennzeichnet**, daß der Bitgruppenspeicher (10) ein dem jeweiligen Ausgang (90) zugeordneter Ausgangsspeicher ist zur Speicherung von zum zugeordneten Ausgang (90) weiterzugebenden Bitgruppen von Bitgruppenpaketsignalen.

10. Schaltungsanordnung nach Anspruch 9, **dadurch gekennzeichnet**, daß eine Bitanzahl der Bitgruppe vorgesehen ist, welche zumindest gleichgroß ist der Anzahl der Eingänge multipliziert mit einem Bittakt des Datenpaketes dividiert durch einen von einer Arbeitstakteinheit (200) aufbereitbaren Bitgruppenarbeitstakt, welcher gleich ist einem Ausgangsspeicherarbeitstakt und ebenso einem Bitgruppenbusarbeitstakt.

11. Schaltungsanordnung nach einem der Ansprüche 1 bis 10, **dadurch gekennzeichnet**, daß das Eingangssignal (8) im Eingangssignalformumsetzer in mehrere aufeinanderfolgende Bitgruppen des Bitgruppenpaketsignales umsetzbar ist, wobei aus der ersten Bitgruppe der für die Weitergabe zutreffende Ausgang ermittelbar ist.

12. Schaltungsanordnung nach Ansrpuch 11, **gekennzeichnet durch** ein Reihungsmittel des Ausgangsspeichers (10), durch welches die in den Ausgangsspeicher eingegebenen Bitgruppen gereiht in aufeinanderfolgenden Bitgruppenpaketsignalen ausgebbar sind.

13. Schaltungsanordnung nach einem der Ansprüche 1 bis 10, **gekennzeichnet** durch ein Bitgruppenpaketsignal (1) bestehend aus einer einzigen Bitgruppe.

14. Schaltungsanordnung nach einem der Ansprüche 1 bis 13, **gekennzeichnet durch** eine dem Eingang (80) zugeordnete Eingangsstufe (70) bestehend aus einem Eingangsspeicher (40) als Zwischenspeicher und aus dem Eingangsschieberegister (60).

15. Schaltungsanordnung nach einem der Ansprüche 8 bis 14, **gekennzeichnet durch** eine Ausgangsstufe (100) bestehend aus einem Ausgangsschieberegister (30) zur Ausgangsumformung, dem Ausgangsspeicher (10) und dem Ausgangsfilter (50).

16. Schaltungsanordnung nach einem der Ansprüche 9 bis 12, **gekennzeichnet durch** ein dem Ausgang (90) zugeordnetes Ausgangsmodul (400), welches einerseits mit dem zugeordneten Ausgang (90) und andererseits mit jedem Eingang (80) verbunden ist, und welches den Ausgangsspeicher (10), den Bitgruppenbus (20), den Ausgangssignalformumsetzer (30) und für jeden Eingang je einen Eingangsteil (470) aufweist.

17. Schaltungsanordnung nach Anspruch 16, **dadurch gekennzeichnet,** daß der Eingangsteil (470) das Eingangsschieberegister (60), den Ausgangsfilter (50) und einen Eingangsspeicher (40) als Zwischenspeicher aufweist.

18. Schaltungsanordnung nach einem der Ansprüche 1 bis 17, **gekennzeichnet durch** einen integrierten Aufbau auf einer einzigen Halbleiterscheibe (3000, 4000).

19. Schaltungsanordnung nach Anspruch 18, **gekennzeichnet durch** ein Basismaterial der Halbleiterscheibe (3000, 4000) bestehend aus Silizium.

20. Schaltungsanordnung nach Anspruch 19, **dadurch gekennzeichnet**, daß CMOS-Schaltungsteile auf der Halbleiterscheibe (3000,4000) vorgesehen sind.

21. Schaltungsanordnung nach Anspruch 19 oder 20, **da****durch gekennzeichnet**, daß BICMOS-Schaltungsteile auf der Halbleiterscheibe (3000, 4000) vorgesehen sind.

22. Schaltungsanordnung nach einem der Ansprüche 18 bis 21, **dadurch gekennzeichnet**, daß deren Schaltungsteile auf der Halbleiterscheibe (3000, 4000) in rechteckförmigen Bereichen mit einer gleichen durch die Bitanzahl begründeten Registerbereichsbreite (33, 34) nebeneinanderliegend angeordnet sind.

23. Schaltungsanordnung nach Anspruch 22, **dadurch gekennzeichnet**, daß mit dem gleichen Bitgruppenbus (20) zu verbindende Bereiche jeweils Registerbereichsbreite (33, 34) an Registerbereichsbreite (33, 34,) nebeneinanderliegend angeordnet sind.

24. Schaltungsanordnung nach Anspruch 17 und 23, **gekennzeichnet durch** folgende Anordnung auf der Halbleiterscheibe (3000):
a) der Ausgangsmodul (400) ist in einem registerbereichsbreiten rechteckförmigen Modulbereich (3400) angeordnet,
b) jeweils die zu jedem Ausgang (90) identisch aufgebauten Modulbereiche (3400) sind nebeneinanderliegend angeordnet,
c) jeweils zu jedem Eingang (80) zugeordnete Eingangsschieberegister (60), Ausgangsfilter (50) und Eingangsspeicher (40) sind im Ausgangsmodul jeweils in einem registerbereichsbreiten rechteckförmigen Eingangsbereich (3470) angeordnet,
d) der Ausgangsspeicher (10) und das Ausgangsschieberegister (30) sind im Ausgangsmodul in einem registerbereichsbreiten rechteckförmigen Ausgangsbereich (3430) angeordnet.

25. Schaltungsanordnung nach Anspruch 15 und 23, **gekennzeichnet durch** folgende Anordnung auf der Halbleiterscheibe (4000):
a) die je Eingang (80) vorgesehenen Eingangsstufen (70) sind in registerbereichsbreiten rechteckförmigen Eingangsstufenbereichen (4070) nebeneinanderliegend angeordnet,
b) die Ausgangsstufen (100) sind in registerbereichsbreiten rechteckförmigen Ausgangsstufenbereichen (4100) nebeneinanderliegend angeordnet,
c) die Eingangsstufenbereiche und die Ausgangsstufenbereiche sind nebeneinanderliegend angeordnet,
d) innerhalb jedes Eingangsstufenbereichs sind das Eingangsschieberegister (60) und der Eingangsspeicher (40) nebeneinanderliegend angeordnet,
e) innerhalb jedes Ausgangsstufenbereiches sind das Ausgangsfilter (50), der Ausgangsspeicher (10) und das Ausgangsschieberegister (30) nebeneinanderliegend angeordnet.

## Claims

1. Circuit arrangement with at least one input and at least one output for forwarding an input signal that can be filtered, parallelized and digitized, having the following features:
a) the input signal (8) that can be input at an input (80) of the circuit arrangement (1000, 2000) can be fed to an input signal form converter (60) for input conversion into an at least partially parallelized bit group packet signal (1) composed of at least one parallel bit group,
b) connected upstream of an output (90) of the circuit arrangement (1000, 2000) is an output signal form converter (30) for output conversion of the bit group packet signal (3) into an output signal (9) that can be output at the output (90),
c) a forwarding means (20) is provided for the parallel forwarding of the bit groups from the input signal form converter (60) to the output signal form converter (30),
d) an intermediate memory (40) is provided for temporarily storing at least one of the bit groups of the bit group packet signal,
e) an output filter (50) is provided for filterable forwarding of the bit group packet signal, which filter has to determine the relevant output for the forwarding from the bit group packet signal.

2. Circuit arrangement according to Claim 1, characterized in that an input signal form of the input signal (8) and an output signal form of the output signal (9) are identical and are a clock-controlled serial, digital and electronic data packet.

3. Circuit arrangement according to one of Claims 1 or 2, characterized by an output shift register (30) of the output signal form converter, into which the bit group packet signal can be input in bit groups in parallel, and from which the output signal can be serially output.

4. Circuit arrangement according to one of Claims 1 to 3, characterized by an input shift register of the input signal form converter, into which the input signal can be input serially, and from which the bit group packet signal can be output in bit groups in parallel.

5. Circuit arrangement according to one of Claims 1 to 4, characterized in that the forwarding means (20) has a bit group bus.

6. Circuit arrangement according to one of Claims 1 to 5, characterized by a bit group memory (10) of the forwarding means for storing the bit groups in bit group memory registers.

7. Circuit arrangement according to Claim 6, characterized in that a number of packets of the bit group packet signals equal to the number of inputs can be stored in the bit group memory (10).

8. Circuit arrangement according to Claim 6 or 7, characterized by at least one index register of the bit group memory (10) for addressing the bit group memory registers.

9. Circuit arrangement according to one of Claims 6 to 8, characterized in that the bit group memory (10) is an output memory assigned to the respective output (90) for storing bit groups of bit group packet signals to be forwarded to the assigned output (90).

10. Circuit arrangement according to Claim 9, characterized in that a number of bits in the bit group is provided which is at least equal to the number of inputs multiplied by a bit clock pulse of the data packet divided by a bit group clock pulse conditioned by a clock pulse unit (200) which is equal to an output memory clock pulse and likewise to a bit group bus clock pulse.

11. Circuit arrangement according to one of Claims 1 to 10, characterized in that the input signal (8) can be converted in the input signal form converter into a plurality of successive bit groups of the bit group packet signal, it being possible to determine the relevant output for the forwarding from the first bit group.

12. Circuit arrangement according to Claim 11, characterized by a serializing means of the output memory (10), by means of which the bit groups input into the output memory can be output in series in successive bit group packet signals.

13. Circuit arrangement according to one of Claims 1 to 10, characterized by a bit group packet signal (1) composed of a single bit group.

14. Circuit arrangement according to one of Claims 1 to 13, characterized by an input stage (70) assigned to the input (80) which is composed of an input memory (40) as intermediate memory and of the input shift register (60).

15. Circuit arrangement according to one of Claims 8 to 14, characterized by an output stage (100) composed of an output shift register (30) for output conversion, the output memory (10) and the output filter (50).

16. Circuit arrangement according to one of Claims 9 to 12, characterized by an output module (400) assigned to the output (90) which is connected on the one hand to the assigned output (90) and on the other hand to each input (80), and which has the output memory (10), the bit group bus (20), the output signal form converter (30) and in each case one input part (470) for each input.

17. Circuit arrangement according to Claim 16, characterized in that the input part (470) has the input shift register (60), the output filter (50) and an input memory (40) as intermediate memory.

18. Circuit arrangement according to one of Claims 1 to 17, characterized by an integrated construction on a single semiconductor wafer (3000, 4000).

19. Circuit arrangement according to Claim 18, characterized by a basic material of the semiconductor wafer (3000, 4000) made of silicon.

20. Circuit arrangement according to Claim 19, characterized in that CMOS circuit parts are provided on the semiconductor wafer (3000, 4000).

21. Circuit arrangement according to Claim 19 or 20, characterized in that BICMOS circuit parts are provided on the semiconductor wafer (3000, 4000).

22. Circuit arrangement according to one of Claims 18 to 21, characterized in that its circuit parts are arranged next to one another on the semiconductor wafer (3000, 4000) in rectangular areas with an identical register area width (33, 34) determined by the number of bits.

23. Circuit arrangement according to Claim 22, characterized in that areas to be connected to the same bit group bus (20) are arranged register area width (33, 34) to register area width (33, 34) next to one another in each case.

24. Circuit arrangement according to Claim 17 and 23, characterized by the following arrangement on the semiconductor wafer (3000):
a) the output module (400) is arranged in a register-area-wide rectangular module area (3400),
b) the module areas (3400) identically constructed for each output (90) in each case are arranged next to one another,
c) input shift registers (60), output filters (50) and input memories (40) assigned in each case to each input (80) are arranged in the output module in a register-area-wide rectangular input area (3470) in each case,
d) the output memory (10) and the output shift register (30) are arranged in the output module in a register-area-wide rectangular output area (3040).

25. Circuit arrangement according to Claim 15 and 23, characterized by the following arrangement on the semiconductor wafer (4000):
a) the input stages (70) provided for each input (80) are arranged next to one another in register-area-wide rectangular input stage areas (4070),
b) the output stages (100) are arranged next to one another in register-area-wide rectangular output stage areas (4100),
c) the input stage areas and the output stage areas are arranged next to one another,
d) within each input stage area, the input shift register (60) and the input memory (40) are arranged next to one another,
e) within each output stage area, the output filter (50), the output memory (10) and the output shift register (30) are arranged next to one another.

## Revendications

1. Montage comportant au moins une entrée et au moins une sortie pour une retransmission d'un signal d'entrée pouvant être filtré, mis en parallèle et numérisé et présentant les caractéristiques suivantes :
a) le signal d'entrée (8), qui peut être introduit à l'entrée (80) du montage (1000, 2000), peut être envoyé à un convertisseur (60) de mise en forme de signaux d'entrée pour une mise en forme en entrée sous la forme d'un signal (1) qui est au moins partiellement mis en parallèle et qui est formé de paquets de groupes de bits comprenant au moins un groupe de bits en parallèle,
b) en amont d'une sortie (90) du montage (1000,2000) est branché un convertisseur (30) de mise en forme du signal de sortie, qui sert à réaliser la mise en forme en sortie du signal (3) formé de paquets de groupes de bits, en un signal de sortie (9) pouvant être délivré à la sortie (90),
c) des moyens de retransmission (20) sont prévus pour la retransmission en parallèle des groupes de bits, du convertisseur (60) de mise en forme du signal d'entrée au convertisseur (30) de mise en forme du signal de sortie,
d) une mémoire intermédiaire (40) est prévue pour une mémorisation temporaire d'au moins l'un des groupes de bits du signal formé de paquets de groupes de bits,
e) pour la retransmission, avec possibilité de filtrage, du signal formé de paquets de groupes de bits, il est prévu un filtre de sortie (50), dont la sortie, qui concerne la retransmission, doit être déterminée à partir du signal formé de paquets de groupes de bits.

2. Montage suivant la revendication 1, caractérisé par le fait qu'une forme du signal (8) d'entrée et une forme du signal (9) de sortie sont identiques et sont un paquet série électronique et numérique de données, commandé de façon cadencée.

3. Montage suivant l'une des revendications 1 ou 2, caractérisé par un registre (30) à décalage de sortie du convertisseur de mise en forme du signal de sortie, dans lequel le signal formé de paquets de groupes de bits peut être introduit en parallèle et groupe de bits par groupe de bits, et à partir duquel le signal de sortie peut être délivré en série.

4. Montage suivant l'une des revendications 1 à 3, caractérisé par un registre à décalage d'entrée du convertisseur de mise de forme de signaux d'entrée, dans lequel le signal d'entrée peut être introduit en série et à partir duquel le signal formé de paquets de groupes de bits peut être délivré en parallèle et groupe de bits par groupe de bits.

5. Montage suivant l'une des revendications 1 à 4, caractérisé par le fait que les moyens de retransmission (20) comprennent un bus de transmission des groupes de bits.

6. Montage suivant l'une des revendications 1 à 5, caractérisé par une mémoire (10) des groupes de bits, que comportent les moyens de retransmission pour la mémorisation des groupes de bits dans des registres de mémoire des groupes de bits.

7. Montage suivant la revendication 6, caractérisé par le fait qu'un nombre de paquets des signaux formés de paquets de groupes de bits, égal au nombre des entrées, peut être mémorisé dans la mémoire (10) de groupes de bits.

8. Montage suivant la revendication 6 ou 7, caractérisé par au moins un registre d'index de la mémoire (10) de groupes de bits pour un adressage des registres de mémoire des groupes de bits.

9. Montage suivant l'une des revendications 6 à 8, caractérisé par le fait que la mémoire (10) des groupes de bits est une mémoire de sortie associée à la sortie respective (90) pour la mémorisation de groupes de bits, qui doivent être retransmis à la sortie associée (90), de signaux de paquets de groupes de bits.

10. Montage suivant la revendication 9, caractérisé par le fait qu'il est prévu, pour le groupe de bits, un nombre de bits qui est au moins égal au nombre des entrées, multiplié par une cadence binaire du paquet de données, et divisé par une cadence de travail des groupes de bits, qui peut être fournie par une unité de cadence de travail (200) et qui est égale à une cadence de travail de la mémoire de sortie et également à une cadence de travail du bus de transmission des groupes de bits.

11. Montage suivant l'une des revendications 1 à 10, caractérisé par le fait que le signal d'entrée (8) peut être converti, dans le convertisseur de mise en forme du signal d'entrée, en plusieurs groupes de bits successifs du signal formé de paquets de groupes de bits, la sortie concernée par la retransmission pouvant être déterminée à partir du premier groupe de bits.

12. Montage suivant la revendication 11, caractérisé par un moyen de rangement en série, que comporte la mémoire de sortie (10) et au moyen duquel les groupes de bits introduits dans la mémoire de sortie peuvent être délivrés en série sous la forme de signaux successifs formés de paquets de groupes de bits.

13. Montage suivant l'une des revendications 1 à 10, caractérisé par un signal (1) constitué de paquets de groupes de bits et comprenant un seul groupe de bits.

14. Montage suivant l'une des revendications 1 à 13, caractérisé par un étage (70) d'entrée associé à l'entrée (80) et constitué d'une mémoire d'entrée (40) en tant que mémoire intermédiaire et d'un registre (60) à décalage d'entrée .

15. Montage suivant l'une des revendications 8 à 14, caractérisé par un étage (100) de sortie constitué d'un registre (30) à décalage de sortie servant à réaliser la conversion en sortie, de la mémoire (10) de sortie et du filtre (50) de sortie.

16. Montage suivant l'une des revendications 9 à 12, caractérisé par un module (400) de sortie, qui est associé à la sortie (90) et qui est relié d'une part à la sortie associée (90) et d'autre part à chaque entrée (91) et qui comprend la mémoire de sortie (10), le bus (20) de transmission de groupes de bits, le convertisseur (30) servant à mettre en forme le signal de sortie et, pour chaque entrée, respectivement une partie (470) d'entrée.

17. Montage suivant la revendication 16, caractérisé par le fait que la partie (470) d'entrée possède le registre (60) à décalage d'entrée, le filtre (50) de sortie et une mémoire (40) d'entrée en tant que mémoire intermédiaire.

18. Montage suivant l'une des revendications 1 à 17, caractérisé par une structure intégrée sur une seule pastille semiconductrice (3000,4000).

19. Montage suivant la revendication 18, caractérisé par un matériau de base de la pastille semiconductrice (3000,4000), en silicium.

20. Montage suivant la revendication 19, caractérisé par le fait que des parties de circuit MOS sont prévues sur la pastille semiconductrice (3000,4000).

21. Montage suivant la revendication 19 ou 20, caractérisé par le fait que des éléments de circuit BICMOS sont prévus sur la pastille semiconductrice (3000,4000).

22. Montage suivant l'une des revendications 18 à 21, caractérisé par le fait que ses parties de circuit sont disposées les unes à côté des autres sur la pastille semiconductrice (3000,4000) dans des zones rectangulaires possédant des largeurs (33,34) identiques de zones de registres, basée sur le nombre de bits.

23. Montage suivant la revendication 22, caractérisé par le fait que des zones devant être réunies au même bus (20) de transmission de groupes de bits possédant respectivement la largeur des zones de registres (33,34) sont disposées les unes à côté des autres sur la largeur (33,34) de zones de registres.

24. Montage suivant l'une des revendications 17 et 23, caractérisé par la disposition suivante sur la pastille semiconductrice (3000) :
a) le module (400) de sortie est disposé dans une zone (3400) rectangulaire de module, possédant la largeur des zones de registres,
b) respectivement les zones (3400) de module, de structure identique pour chaque sortie (90), sont disposées les unes à côté des autres,
c) un registre (60) à décalage, un filtre (50) de sortie et une mémoire d'entrée (40), qui sont associés respectivement à chaque entrée (80), sont disposés dans le module de sortie respectivement dans une zone (3470) rectangulaire d'entrée possédant la largeur des zones de registres,
d) la mémoire (10) de sortie et le registre (30) à décalage de sortie sont disposés, dans le module de sortie, dans une zone (3403) rectangulaire de sortie possédant la largeur des zones de registres.

25. Montage suivant l'une des revendications 15 et 23, caractérisé par la disposition suivante sur la pastille semiconductrice (4000) :
a) les étages d'entrée (70), qui sont prévus pour chaque entrée (80), sont disposés les uns à côté des autres dans des zones rectangulaires (4070) d'étages d'entrée, qui possèdent la largeur des zones de registres,
b) les étages (100) de sortie sont disposés les uns à côté des autres dans des zones (4100) rectangulaires d'étages de sortie, possédant la largeur des zones de registres,
c) les zones d'étages d'entrée et les zones d'étages de sortie sont disposées les unes à côté des autres,
d) à l'intérieur de chaque zone d'étage d'entrée, le registre (60) à décalage d'entrée et la mémoire (40) d'entrée sont disposés l'un à côté de l'autre,
e) à l'intérieur de chaque zone d'étage de sortie, le filtre (50) de sortie, la mémoire (10) de sortie et le registre (30) à décalage de sortie sont disposés les uns à côté des autres.
